(19) Europäisches Patentamt
European Patent Office
Office européen des brevets

(11) EP 1 485 459 B1

(12) **FASCICULE DE BREVET EUROPEEN**

(45) Date de publication et mention de la délivrance du brevet:
**27.09.2006 Bulletin 2006/39**

(21) Numéro de dépôt: **03725286.3**

(22) Date de dépôt: **13.03.2003**

(51) Int Cl.:
*C11D 3/37* (2006.01) *C08G 69/44* (2006.01)

(86) Numéro de dépôt international:
**PCT/FR2003/000802**

(87) Numéro de publication internationale:
**WO 2003/078560 (25.09.2003 Gazette 2003/39)**

(54) **COPOLYESTERAMIDES ET LEUR UTILISATION COMME AGENT ANTISALISSURE**

COPOLYESTERAMIDE UND IHRE VERWENDUNG ALS FÄULNISVERHINDERNDE MITTEL

COPOLYESTERAMIDES AND THE USE THEREOF AS A SOIL RELEASE AGENT

(84) Etats contractants désignés:
**AT BE BG CH CY CZ DE DK EE ES FI FR GB GR HU IE IT LI LU MC NL PT RO SE SI SK TR**

(30) Priorité: **15.03.2002 FR 0203237**

(43) Date de publication de la demande:
**15.12.2004 Bulletin 2004/51**

(73) Titulaire: **RHODIA CHIMIE**
**92512 Boulogne Billancourt Cedex (FR)**

(72) Inventeurs:
- **Trouillet-Fonti, Lise**
  **69003 Lyon (FR)**
- **Fleury, Etienne**
  **69540 IRIGNY (FR)**
- **Geffroy, Cédric**
  **86000 Poitiers (FR)**
- **Touraud, Franck**
  **27200 Vernon (FR)**

(74) Mandataire: **Boittiaux, Vincent**
**Rhodia Services,**
**DPI,**
**40, rue de la Haie-Coq**
**93306 Aubervilliers Cedex (FR)**

(56) Documents cités:
**WO-A-00/53711**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 485 459 B1

## Description

La présente invention a pour objet de nouveaux copolymères linéaires sulfonés (copolyesteramides linéaires sulfonés) hydrosolubles ou hydrodispersables, leur procédé de préparation et leur utilisation comme agent antisalissure (« soil release ») et/ou antiredéposition et/ou détergent dans les compositions pour le traitement (lavage et/ou rinçage, détachage avant lavage, séchage dans un sèche-linge ou repassage) des articles en fibres textiles, notamment en fibres polyamide.

Les polyesters sulfonés hydrosolubles ou hydrodispersables sont connus comme additifs anti-salissure (« soil release ») dans les compositions détergentes pour le lavage des articles en fibres textiles à base de polyester (EP-A-763 068 ; US-A-4,877,896 ; US-A-5,599,792 ; WO 93/21294; US-A-5,415,807; WO 95/02030).

WO-A-00/53711 décrit un copolymère hydrosoluble ou hydrodispersible comprenant une unité polyoxyalkylène (POA) qui comprend de 2 à 200, de préférence de 5 à 150 motifs oxyalkylène et une unité polyamide sulfonée (PAS) comprenant des motifs polyfunctionels non sulfonés et des motifs polyfunctionels sulfonés. Le taux de fonctions $SO_3M$ dans les unités PAS est tel qu'il représente au moins 0, 1 % de la masse totale de copolymère, et le rapport masse de l'ensemble des unités POAlmasse de l'ensemble des unités PAS est de 95/5 à 30/70. Le copolymère peut être utilisé comme agent détergent des surfaces dures ou textiles, et/ou comme agent susceptible d'apporter auxdites surfaces des propriétés de résistance aux taches et/ou permettant de faciliter l'enlèvement des taches et de la salissure desdites surfaces.

La Demanderesse a trouvé de nouveaux copolymères dérivés de polyesters sulfonés hydrosolubles ou hydrodispersables présentant en outre une efficacité améliorée en particulier comme agent antisalissure («soil release ») pour le lavage de textiles en fibre polyamide, notamment en présence d'agents tensioactifs anioniques ou d'un mélange d'agents tensioactifs anioniques et non-ioniques.

Un premier objet de l'invention consiste en de nouveaux copolymères linéaires sulfonés (C) hydrosolubles ou hydrodispersables, caractérisés en ce qu'ils comprennent :

➢ **(i)** des chaînes polyesteramides linéaires ($C_1$), éventuellement des chaînes polyesters linéaires ($C_2$), et éventuellement des chaînes polyamides ($C_3$),

♦ **(<u>i1</u>)** lesdites chaînes polyesteramides linéaires ($C_1$) consistant essentiellement en

- au moins une unité « esteramide » de formule générale (I)

$$[-C(O)-Q-C(O)-\{NR'-W-C(O)\}_m-(O-R-)_n-O-] \qquad (I)$$

où

* le symbole Q représente

. un reste (NQ) mono- ou poly-arylène non-ionique ou alkylène non-ionique,
. ou un reste (SQ) mono- ou poly-arylène sulfoné ou alkylène sulfoné porteur d'au moins une fonction acide sulfonique ou sulfonate,

* R' est H ou un reste alkylène contenant de 1 à 4 atomes de carbone,
* W est un reste alkylène non-ionique ou arylène non-ionique contenant de 1 à 20 atomes de carbone, de préférence de 1 à 12 atomes de carbone,
* R est un reste alkylène linéaire ou ramifié contenant de 2 à 4 atomes de carbone, éthylène de préférence,
* <u>m</u> est égal à au moins 1,
*<u>n</u> va de 1 à 4 ;

et éventuellement, en

- au moins une unité « ester » de formule générale (II)

$$[-C(O)-Q-C(O)-(O-R-)_n-O-] \qquad (II)$$

où
les symboles Q, R et <u>n</u> ont la définition donnée ci-dessus ;

♦ **(i2)** lesdites chaînes polyesters linéaires ($C_2$) éventuelles ayant pour formule générale (III)

$$[-C(O)-Q-C(O)-(O-R-)_n-O-]_x \qquad (III)$$

où

* les symboles Q, R et n ayant la définition donnée ci-dessus,
* x est supérieur à 1,

le pourcentage molaire des groupes de formule -C(O)-Q-C(O)- où Q est un reste sulfoné (SQ), par rapport à l'ensemble des motifs de formule -C(O)-Q-C(O)- dans les unités ou chaînes de formules (I), (II) et (III) étant de 5 à 40, de préférence de 7 à 35;

♦ **(i3)** lesdites chaînes polyamides ($C_3$) éventuelles ayant pour formule générale (IV)

$$-\{NR'-W-C(O)\}_z- \qquad (IV)$$

où:

* R' et W ont la définition donnée ci-dessus,
* z est supérieur à 1 ;

➢ et **(ii)**

♦ **(ii1)** en extrémités de chaîne ($C_1$),

- un groupement « amide » de formule (V)

$$HO-[(O)C-W-NR')-]_p \qquad (V)$$

où

* les symboles W et R' ont la définition donnée ci-dessus,
* p est égal à au moins 1 ;

et/ou :

- un groupement de formule (VI1)

$$Z-(O-R)_n-O- \qquad (VI1)$$

où :

* R et n ont la définition donnée ci-dessus,
* Z représente

. H,

- un groupe sulfobenzoyle,
- un groupe sulfoalkyle contenant de 2 à 30 atomes de carbone,
- un groupe phenylsulfonate ;

et/ou :

• un groupement de formule (VII1)

$$Y-O- \qquad (VII1)$$

où Y représente H ou un radical alkyle comprenant de 1 à 30 atomes de carbone, méthyle de préférence ; et/ou :

- un reste -Y de définition donnée ci-dessus, lié à un atome d'oxygène d'une fonction ether de la chaîne ($C_1$) ;

♦ **(ii2)** en extrémités de chaîne ($C_2$),

- un groupement de formule (VI2)

$$Z\text{-}(O\text{-}R)_n\text{-}O\text{-} \qquad (VI2)$$

où:

- R, Z et n ont la définition donnée ci-dessus ;

et/ou :

- un groupement de formule (VII2)

$$Y\text{-}O\text{-} \qquad (VII2)$$

où Y a la définition donnée ci-dessus
et/ou :

- un reste -Y de définition donnée ci-dessus, lié à un atome d'oxygène d'une fonction ether de la chaîne ($C_2$) ;

♦ **(ii3)** et, en extrémités de chaîne ($C_3$),

- un atome d'hydrogène lié à un atome d'azote de la chaîne ($C_3$) ;
- et une fonction -OH liée à un reste carbonyle -C(O)- de la chaîne ($C_3$) ;

- lesdites unités des chaînes ($C_1$) étant
  - liées entre elles ou aux extrémités de chaînes **(ii1)** de formules (VI1) et (VII1) par des liaisons esters,
  - liées aux extrémités de chaînes **(ii1)** de formule (V) par des liaisons amides ;

- la chaîne ($C_2$) étant liée aux extrémités de chaîne **(ii2)** de formules (VI2) et (VII2) par des liaisons esters ;
- le nombre d'unités de formules (I) et (II) des chaînes ($C_1$), les valeurs de m, de p, de x et de z étant telles que la masse molaire moyenne en poids desdits copolymères linéaires sulfonés (C) est de 500 à 80000g/mol, de préférence de 1 500 à 80 000 g/mol, tout particulièrement de 3 000 à 20 000 g/mol
- la valeur de m, de m+p, de m+z ou de m+p+z lorsque un ou des groupes « amides » de formule (V) et/ou une ou des chaînes polyamides ($C_3$) sont présents, étant telle que le rapport du nombre de groupes -C(O)-Q-C(O)- au nombre de groupes -(NR'-W-C(O)- présents dans lesdits copolymères linéaires sulfonés (C) soit compris entre 1/99 et 99/1, de préférence entre 10/90 et 99/1, tout particulièrement entre 40/60 et 95/5.

Lesdits copolymères linéaires sulfonés (C) selon l'invention, sont considérés comme hydrosolubles, lorsqu'au moins 5% de leurs poids sont solubles dans de l'eau de pH 7 à 25°C. Ils sont considérés comme hydrodispersables, lorsqu'ils ne forment pas d'aggrégats dans ces mêmes conditions.

D'une manière préférentielle, les chaînes polyesteramides ($C_1$) consistent essentiellement en

- au moins une unité de formule (I')

$$[\text{-}C(O)\text{-}Q\text{-}C(O)\text{-}\{NR'\text{-}W\text{-}C(O)\}_m\text{-}(O\text{-}CH_2\text{-}CH_2\text{-})_n\text{-}O\text{-}] \qquad (I')$$

et, éventuellement, en

- au moins une unité de formule (II')

$$[-C(O)\text{-}Q\text{-}C(O)\text{-}(O\text{-}CH_2\text{-}CH_2\text{-})_n\text{-}O] \qquad (II')$$

Les groupements de formule (V) ci-dessus et/ou de formule (VI'1)

$$H\text{-}(O\text{-}CH_2\text{-}CH_2\text{-})_n\text{-}O \qquad (VI'1)$$

et/ou un atome d'hydrogène H sont présents en extrémités des chaînes ($C_1$) préférentielles.
Les chaînes polyesters ($C_2$) éventuelles ont pour formule générale (III')

$$[-C(O)\text{-}Q\text{-}C(O)\text{-}(O\text{-}CH_2\text{-}CH_2\text{-})_n\text{-}O]_x \qquad (III')$$

Les groupements de formule (VI'2)

$$H\text{-}(O\text{-}CH_2\text{-}CH_2\text{-})_n\text{-}O \qquad (VI'2)$$

et/ou un atome d'hydrogène H sont présents en extrémités des chaînes ($C_2$) éventuelles préférentielles.

D'une manière encore plus préférentielle, le pourcentage molaire des restes de formule $(O\text{-}CH_2\text{-}CH_2\text{-})_n$ où $\underline{n}$ est égal à 1, par rapport à l'ensemble des restes de formule $(O\text{-}CH_2\text{-}CH_2\text{-})_n$, où $\underline{n}$ est égal à 1, 2, 3 et 4 dans les unités ou extrémité(s) de formule (I'), (II'), (VI'1), (III') et (VI'2) est de 10 à 80, de préférence de 20 à 60.

Les masses moléculaires en poids sont mesurées par chromatographie par perméation de gel, dans le dichlorométhane contenant 2/1000 en volume d'anhydride trifluoroacétique et $5 \times 10^{-3}$ M de $BF_4N(Bu)_4$, à température ambiante. Les résultats sont exprimés en équivalents polystyrène.

Les restes non-ioniques (NQ) des unités de formules (I), (II), et (III) peuvent être semblables ou différents.

Comme exemple de restes non-ioniques (NQ), on peut mentionner les restes mono- ou poly-arylènes non-ioniques en $C_6$-$C_{14}$ et les restes alkylènes non-ioniques en $C_1$-$C_9$ linéaires ou ramifiés comme les restes 1,4-phénylène, 1,3-phénylène, 1,6-naphtalène, 1,6-cyclohexylène, éthylène, triméthylène, tetraméthylène, hexaméthylène.

Les restes sulfonés (SQ) des unités de formules (I), (II) et (III) peuvent être semblables ou différents.

Comme exemple de restes sulfonés (SQ), on peut mentionner les restes mono- ou poly- arylènes en $C_6$-$C_{14}$ sulfonés et les restes alkylènes linéaires ou ramifiés en $C_1$-$C_9$ sulfonés porteurs d'au moins une fonction acide sulfonique, de préférence sous forme d'un sulfonate de métal alcalin ou de tetraalkylammonium, de sodium tout particulièrement, comme les restes sodio-oxysulfonyl phénylènes, sodio-oxysulfonyl naphtalènes, sodio-oxysulfonyl biphénylènes, sodio-oxysulfoéthylène.

D'une manière préférentielle, le reste non-ionique (NQ) est un reste 1,4-phénylène (NQ1) ou 1,3-phénylène (NQ2) et le reste sulfoné (SQ) un reste sodio-oxysulfonyl-5 1,3-phénylène.

D'une manière toute préférentielle, les restes (NQ) non-ioniques des unités de formules (I), (II) et (III) sont des restes 1,4-phénylène (NQ1) ou un mélange de restes 1,4-phénylène (NQ1) et 1,3-phénylène (NQ2), le pourcentage molaire des motifs de formule -C(O)-Q-C(O)- où Q est un reste (NQ1) par rapport à l'ensemble des motifs de formule -C(O)-Q-C(O)- où Q est un reste non-ionique (NQ) étant de l'ordre de 50 à 100, de préférence de 70 à 90.

D'une manière préférentielle, le symbole R dans les formules (I), (II), (III), (VI1) et (VI2) représente un reste éthylène $-CH_2\text{-}CH_2\text{-}$.

D'une manière préférentielle, le symbole W dans les formules (I), (I'), (IV) et (V) représente un reste éthylène, triméthylène, tetraméthylène, pentaméthylène, heptaméthylène, décaméthylène, undécaméthylène, phénylène.

D'une manière préférentielle, le symbole R' dans les formules (I), (I'), (IV) et (V) représente H.

Les nouveaux copolymères linéaires sulfonés (C), faisant l'objet de l'invention peuvent être obtenus par réaction :

- d'insertion/polymérisation, en présence d'un catalyseur d'insertion/polymérisation, ou
- d'aminolyse/acidolyse/polycondensation, en présence d'un catalyseur d'aminolyse/acidolyse/polycondensation, ou
- d'échange ester/amide, en présence d'un catalyseur d'échange ester/amide,

en milieu fondu

(**a**) d'au moins un aminoacide ou polyaminoacide (« polyamide ») de formule (VIII) ou lactame correspondant,

$$H\text{-}[NR'\text{-}W\text{-}C(O)\text{-}]_qOH \qquad (VIII)$$

où :

- W et R' ont la définition donnée ci-dessus,
- q va de 1 à 200 de préférence de 1 à 100 ;

**(b)** avec un polyester linéaire sulfoné comprenant

**(b1)** une chaîne polyester de formule générale (IX)

$$[-C(O)-Q-C(O)-(O-R-)_n-O]_y \qquad (IX)$$

où :

* le symbole Q représente

. un reste (NQ) mono- ou poly-arylène non-ionique ou alkylène non-ionique,
. ou un reste (SQ) mono- ou poly-arylène sulfoné ou alkylène sulfoné porteur d'au moins une fonction acide sulfonique ou sulfonate,

* R est un reste alkylène linéaire ou ramifié contenant de 2 à 4 atomes de carbone, éthylène de préférence,

* n va de 1 à 4,

* y est supérieur à 1 ;et

**(b2)** en extrémités de chaîne, des groupements de formule (VI2) et/ou (VII2) et/ou Y données ci-dessus,

le pourcentage molaire des groupes de formule -C(O)-Q-C(O)- où Q est un reste sulfoné (SQ), par rapport à l'ensemble des groupes de formule -C(O)-Q-C(O)-dans les unités de formule (VIII) étant de 5 à 40, de préférence de 7 à 35 ;

- les valeurs de n et y étant telles que la masse moléculaire en poids dudit polyester est supérieure à 1 500 g/mol, de préférence entre 2000 et 10 000 g/mol ;
- les quantités relatives d'aminoacide, polyaminoacide de formule (VIII) ou lactame et de polyester linéaire sulfoné étant telles que le rapport du nombre de groupes -C(O)-Q-C(O)- mis en oeuvre par l'intermédiaire dudit polyester linéaire sulfoné au nombre de groupes -(NR'-W-C(O)- mis en oeuvre par l'intermédiaire dudit aminoacide ou polyaminoacide de formule (VIII) ou lactame soit compris entre 1/99 et 99/1, de préférence entre 10/90 et 99/1, tout particulièrement entre 40/60 et 95/5.

Par réaction d'insertion/polymérisation, on entend l'insertion d'un lactame correspondant à un aminoacide de structure de formule (VIII) dans laquelle q est égal à 1, à l'intérieur de la structure dudit polyester linéaire sulfoné et éventuellement polymérisation dudit lactame par ouverture de cycle initiée par les extrémités de chaînes du dit polyester linéaire sulfoné.
La réaction d'insertion peut être illustrée comme suit :

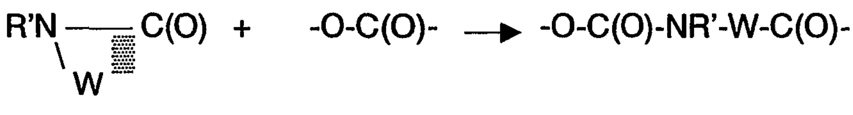

Par réaction d'aminolyse/acidolyse/polycondensation, on entend la réaction d'un aminoacide de structure de formule (VIII) dans laquelle q est égal à 1, sur ledit polyester sulfoné et sur lui-même.
Par réaction d'échange ester/amide, on entend la réaction d'un aminoacide de structure de formule (VIII) dans laquelle q est supérieur à 1, sur ledit polyester sulfoné.

La réaction entre ledit aminoacide, polyaminoacide ou lactame et ledit polyester linéaire sulfoné est réalisée en milieu fondu, à une température pouvant aller favorablement de 220 à 280°C, plus préférentiellement autour de

250°C, sous une pression de 1 à 3 bar, de préférence de 1 bar.
Ladite réaction peut être réalisée en absence ou en présence de catalyseur, en quantité pouvant aller jusqu'à 0,2% en poids par rapport à la quantité totale de réactifs mis en oeuvre.
Les catalyseurs pouvant être mis en oeuvre sont notamment des dérivés du zinc, du phosphore, de l'étain, de l'antimoine, ou du soufre, comme l'acétate de zinc, l'acide hypophosphoreux, l'acide orthophosphoreux, le dibutyldilaurate d'étain, le trioxyde d'antimoine, l'acide p-toluène sulfonique; tout préférentiellement, il s'agit de l'acétate de zinc et de l'acide hypophosphoreux.
La réaction peut durer de 1 heure à 10 heures lorsqu'elle est réalisée dans un réacteur classique de polymérisation ; elle peut durer de 10 secondes à 10 minutes lorsqu'elle est réalisée dans un outil d'extrusion (vis par exemple).

L'insertion/polymérisation est un mode particulièrement intéressant de préparation des copolymères linéaires sulfonés de l'invention.
D'une manière préférentielle, le taux d'eau dans le milieu réactionnel est inférieur à 5%, encore plus préférentiellement inférieur à 1% en poids.

Parmi les aminoacides, polyaminoacides ou lactames pouvant être mis en oeuvre, on peut mentionner

- le béta-propiolactame, le gama-butyrolactame, le delta-valérolactame, l'epsilon-caprolactam, l'êta-caprylolactame, le lactam de l'acide oméga-amino undécanoïque, et les aminoacides correspondants,
- les acides para- et méta-amino benzoïques,
- le polyamide 6, le polyamide 8, le polyamide 12, et leurs copolymères, de degré de polymérisation allant de 2 à 200, de préférence de 2 à 100.

Parmi les polyesters linéaires sulfonés pouvant être mis en oeuvre, on peut notamment citer ceux faisant l'objet de EP-A-763,068, US-A-4,877,896, US-A-5,599,792, WO 93/21294, US-A-5,415,807 et WO 95/02030.

Selon un mode de réalisation préférentiel, le polyester linéaire sulfoné mis en oeuvre comprend :

* une chaîne polyester de formule générale (IX')

$$[\text{-C(O)-Q-C(O)-(O-CH}_2\text{-CH}_2\text{-)}_n\text{-O]}_y \qquad \text{(IX')}$$

et
* en extrémités de chaîne des groupements de formule (VI'2)

$$\text{H-(O-CH}_2\text{-CH}_2\text{-)}_n\text{-O-} \qquad \text{(VI'2)}$$

et H.

D'une manière encore plus préférentielle, le pourcentage molaire des restes de formule $(O\text{-}CH_2\text{-}CH_2\text{-})_n$ où <u>n</u> est égal à 1, par rapport à l'ensemble des restes de formule $(O\text{-}CH_2\text{-}CH_2\text{-})_n$ où <u>n</u> est égal à 1, 2, 3 et 4 dans les chaînes ou extrémité(s) de formule (IX') et (VI'2) est de l'ordre de 10 à 80, de préférence de l'ordre de 20 à 60.

Les polyesters linéaires sulfonés mis en oeuvre pour préparer les nouveaux copolymères linéaires sulfonés (C) de l'invention sont des produits connus.
Ainsi les polyesters linéaires sulfonés présentant en extrémités de chaînes des groupements de formule (VI'2) et H, peuvent être obtenus de manière connue, par exemple par estérification et/ou transestérification en présence d'un catalyseur d'estérification/transestérification et polycondensation en présence d'un catalyseur de polycondensation, d'une composition monomère consistant essentiellement en :

- un monomère diacide (MNQ) non sulfoné constitué d'au moins un acide ou anhydride dicarboxylique aromatique ou aliphatique, leurs diesters, en quantité correspondant à un rapport molaire (MNQ) / (MNQ)+(MSQ) de l'ordre de 95/100 à 60/100, de préférence de l'ordre de 93/100 à 65/100
- un monomère diacide sulfoné (MSQ) constitué d'au moins un acide ou anhydride dicarboxylique aromatique sulfoné ou aliphatique sulfoné ou leurs diesters, en quantité correspondant à un rapport molaire (MSQ) / (MNQ)+(MSQ) de l'ordre de 5/100 à 40/100, de préférence de l'ordre de 7/100 à 35/100
- et un monomère polyol (P) constitué de diol HO-R-OH et éventuellement de diol HO-R-O-R-OH (de préférence d'éthylène glycol et éventuellement de diéthylèneglycol), selon une quantité correspondant à un rapport nombre de fonctions OH du monomère polyol (P) / nombre de fonctions ou d'équivalents fonctions COOH des monomères diacides (MNQ)+(MSQ) de l'ordre de 1,05 à 4, de préférence de l'ordre de 1,1 à 3,5, et tout particulièrement de l'ordre de 1,8 à 3.

L'entité élémentaire considérée dans la définition de la mole de monomère (MNQ) ou (MSQ) est la fonction COOH dans le cas des diacides ou l'équivalent fonction COOH dans le cas des anhydrides ou des diesters.
Parmi les monomères diacides non sulfonés (MNQ), on peut citer les acides téréphtalique, isophtalique, 2,6 naphtalène dicarboxylique, cyclohexane dicarboxylique, succinique, glutarique, adipique, subérique, leurs anhydrides ou diesters inférieurs.
Le monomère diacide non sulfoné (MNQ) est de préférence constitué par 50 à 100% molaire, tout particulièrement de 70 à 90% molaire, d'acide ou anhydride téréphtalique ou d'un de ses diesters inférieurs (de méthyle, éthyle, propyle, isopropyle, butyle) et de 0 à 50% molaire, tout particulièrement de 10 à 30% molaire, d'acide ou anhydride isophtalique ou d'un de ses diesters inférieurs (de méthyle, éthyle, propyle, isopropyle, butyle) ; les diesters préférentiels sont ceux de méthyle.
Le monomère diacide sulfoné (MSQ) présente au moins un groupe acide sulfonique, de préférence sous la forme d'un sulfonate de métal alcalin ou de tétraalkylammonium (de sodium de préférence), et deux fonctions acides ou équivalents fonctions acides (c'est-à-dire une fonction anhydride ou deux fonctions esters) fixées sur un ou plusieurs cycles aromatiques lorsque ledit monomère est aromatique.
Dans le cas d'un monomère diacide sulfoné aliphatique, le groupe acide sulfonique peut être lié à un atome de carbone d'un radical alkylène soit directement soit indirectement par l'intermédiaire d'un groupe alkylène, alcoxyalkylène, oxyalkylène, arylalkylène, alkylarylalkylène, alkoxyarylène.
Parmi les monomères diacides sulfonés (MSQ), on peut citer les acides dicarboxyliques sulfonés aromatiques ou aliphatiques tels que les acides sulfo-isophtaliques, sulfo-terephtaliques, sulfo-orthophtaliques, sulfo-4 naphtalène dicarboxylique-2,7, sulfo-diphényl-dicarboxyliques, sulfosuccinique, leurs anhydrides ou diesters inférieurs. Les monomères diacides sulfonés (MSQ) préférentiels sont les acides ou anhydrides sulfo-isophtaliques et leurs diesters de méthyle, et tout particulièrement le sodio-oxysulfonyl-5 isophtalate de diméthyle.
Les polyesters sulfonés préférentiels peuvent être obtenus à partir :

- d'acide téréphtalique (MNQ1), sous forme de diester (de préférence de méthyle), éventuellement en mélange avec de l'acide isophtalique et/ou téréphtalique (MNQ2) sous forme de diacide ou d'anhydride, selon un rapport molaire (MNQ1)/(MNQ1)+(MNQ2) de l'ordre de 100/100 à 50/100, de préférence de l'ordre de 90/100 à 70/100,
- d'acide sodio-oxysulfonyl-5 sulfoisophtalique, sous forme de diester (de préférence de méthyle),
- de monoéthylène glycol.

Ils peuvent être préparés par réalisation des étapes successives suivantes :

- une étape de transestérification (interéchange) entre d'une part le diester (de préférence de méthyle) de l'acide téréphtalique (MNQ1) et le diester (de préférence de méthyle) de l'acide sulfoisophtalique (MSQ) et d'autre part du monoéthylène glycol (P), le rapport nombre de fonctions OH de (P) / nombre d'équivalents fonctions COOH de (MNQ1)+(MSQ) étant de l'ordre de 1,05 à 4, de préférence de l'ordre de 1,1 à 3,5, et tout particulièrement de l'ordre de 1,8 à 3,
- une étape d'estérification entre l'acide isophtalique et/ou téréphtalique (MNQ2) et d'autre part du monoéthylène glycol (P), le rapport nombre de fonctions OH de (P) / nombre de fonctions COOH de (MNQ2) étant de l'ordre de 1,05 à 4, de préférence de l'ordre de 1,1 à 3,5, et tout particulièrement de l'ordre de 1,8 à 3,
- une étape de polycondensation.

Les conditions opératoires des étapes de transestérification, estérification et de condensation pouvant être mises en oeuvre sont celles décrites dans WO95/32997.
L'obtention d'extrémités de chaînes de formule du type (VI2) où le symbole Z représente un groupement sulfobenzoyle peut être réalisée par mise en oeuvre, de préférence à l'étape d'estérification, de monomères monoacides sulfonés comme l'acide m-sodiosulfobenzoïque, le m-sodiosulfobenzoate de méthyle ou de 2-hydroxyéthyle.
Les copolymères linéaires sulfonés (C), faisant l'objet de l'invention, peuvent être utilisés comme agents antisalissures («soil release») et/ou antiredéposition et/ou détergent dans des compositions de traitement des articles en fibres textiles, de préférence à base de polymère synthétique (polyamide et polyester par exemple), lesdites compositions étant destinées à être mise en oeuvre dans une opération de lavage et/ou rinçage, détachage avant lavage (« prespotting »), séchage en sèche-linge ou repassage desdits articles.
Lesdits copolymères sont particulièrement intéressants comme agents antisalissure («soil release») pour le lavage et/ou le rinçage, détachage avant lavage («prespotting»), séchage en sèche-linge ou repassage des articles en fibres polyamide.
Un deuxième objet de l'invention consiste en une composition de traitement, des articles en fibres textiles, destinée à être mise en oeuvre dans une opération de lavage et/ou rinçage, détachage avant lavage (« prespotting »), séchage en sèche-linge ou repassage desdits articles, comprenant de 0,01 à 70%, de préférence de 0,05 à 30%, par

rapport au poids desdites compositions, d'au moins un copolymère linéaire sulfonés (C) hydrosoluble ou hydrodispersable décrit ci-dessus.

La forme de la composition et les conditions d'usage (ou de traitement) peuvent être multiples.
Ladite composition peut se présenter

* sous forme d'un solide (poudre, granulés, tablettes ...) ou d'une solution ou dispersion aqueuse concentrée, mis en contact avec les articles à traiter, après dilution dans l'eau ;
* sous forme d'une solution ou dispersion aqueuse concentrée préalablement déposée sur les articles secs à traiter avant dilution dans l'eau ;
* sous forme d'une solution ou dispersion aqueuse à déposer directement sur les articles secs à traiter sans dilution ou d'un support solide (bâton) comprenant ledit copolymère linéaire sulfoné (C), à appliquer directement sur les articles secs à traiter ;
* sous forme d'un support solide insoluble comprenant ledit copolymère linéaire sulfoné (C) mis en contact directement avec les articles à traiter à l'état humide.

Ainsi la composition selon l'invention peut être :

- une formulation détergente solide ou liquide susceptible de former directement par dilution un bain lessiviel ;
- une formulation rinçante liquide susceptible de former directement par dilution un bain de rinçage ;
- un matériau solide, textile notamment, comprenant ledit copolymère linéaire sulfoné (C), destiné à être mis en contact avec les articles humides dans un sèche-linge (ledit matériau solide est appelé ci-après "additif de séchage") ;
- une formulation aqueuse de repassage ;
- un additif de lavage ("prespotter") destiné à être déposé sur les articles secs préalablement à une opération de lavage à l'aide d'une formulation détergente contenant ou ne contenant pas ledit copolymère linéaire sulfoné (C) (ledit additif est appelé ci-après "additif de lavage").

Le pH d'utilisation de la composition selon l'invention peut aller d'environ 2 à environ 12, selon l'usage recherché. Lorsqu'il s'agit

- d'une formulation détergente, le pH du bain lessiviel est généralement de l'ordre 7 à 11, préférentiellement de 8 à 10,5 ;
- d'une formulation rinçante, le pH du bain de rinçage est généralement de l'ordre 2 à 8 ;
- d'un additif de séchage, le pH à considérer est celui de l'eau résiduelle, qui peut être de l'ordre 2 à 9 ;
- d'une formulation aqueuse de repassage, le pH de ladite formulation est généralement de l'ordre 5 à 9 ;
- d'un additif de lavage ("prespotter"), le pH à considérer est celui du pH du bain lessiviel de l'opération suivante de lavage, à savoir de l'ordre 7 à 11, préférentiellement de 8 à 10,5.

La quantité de copolymère (C) pouvant être mise en oeuvre est fonction de l'application recherchée.
Ainsi, ledit copolymère (C) peut être mis en oeuvre comme suit :

| % de (C) (en sec) | Dans une composition selon l'invention, destinée |
|---|---|
| 0,01 - 10<br>de préférence 0,1 -1 | Au lavage |
| 0,01 - 10<br>de préférence 0,1 - 5 | Au rinçage |
| 0,01 - 10<br>de préférence 0,05 - 3 | Détachage avant lavage |
| 0,01 - 50<br>de préférence 0,1 - 5 | Au repassage |
| 0,01 - 70 30<br>de préférence 0,1 - 30 | Au séchage en sèche-linge |

D'autres constituants peuvent être présents, à côté du copolymère (C) dans la composition selon l'invention. Ladite composition peut contenir au moins un agent tensioactif et/ou un additif de détergence et/ou de rinçage et/ou de

repassage des articles en fibres textiles et/ou un support solide (textile notamment) dudit copolymère (C). De préférence, ladite composition comprend au moins un agent tensioactif anionique ou un mélange d'agent tensioactifs anioniques et non-ioniques.

La nature de ces constituants est fonction de l'usage recherché de ladite composition.

Ainsi, lorsqu'il s'agit d'une formulation détergente, pour le lavage du linge, celle-ci comprend généralement :

- au moins un agent tensioactif naturel et/ou synthétique,
- au moins un adjuvant de détergence ("builder"),
- éventuellement un agent ou un système oxydant,
- et une série d'additifs spécifiques.

La formulation détergente peut comprendre des agents tensioactifs en une quantité correspondant à environ 3 à 40% en poids par rapport à la formulation détergente, agents tensioactifs tels que

<u>*Agents tensioactifs anioniques*</u>

. les alkylesters sulfonates de formule R-CH($SO_3$M)-COOR', où R représente un radical alkyle en $C_8$-$C_{20}$, de préférence en $C_{10}$-$C_{16}$, R' un radical alkyle en $C_1$-$C_6$, de préférence en $C_1$-$C_3$ et M un cation alcalin (sodium, potassium, lithium), ammonium substitué ou non substitué (méthyl-, diméthyl-, triméthyl-, tetraméthylammonium, diméthylpiperidinium...) ou dérivé d'une alcanolamine (monoéthanolamine, diéthanolamine, triéthanolamine...). On peut citer tout particulièrement les méthyl ester sulfonates dont les radical R est en $C_{14}$-$C_{16}$ ;

. les alkylsulfates de formule $ROSO_3M$, où R représente un radical alkyle ou hydroxyalkyle en $C_5$-$C_{24}$, de préférence en $C_{10}$-$C_{18}$, M représentant un atome d'hydrogène ou un cation de même définition que ci-dessus, ainsi que leurs dérivés éthoxylénés (OE) et/ou propoxylénés (OP), présentant en moyenne de 0,5 à 30 motifs, de préférence de 0,5 à 10 motifs OE et/ou OP ;

. les alkylamides sulfatés de formule RCONHR'$OSO_3$M où R représente un radical alkyle en $C_2$-$C_{22}$, de préférence en $C_6$-$C_{20}$, R' un radical alkyle en $C_2$-$C_3$, M représentant un atome d'hydrogène ou un cation de même définition que ci-dessus, ainsi que leurs dérivés éthoxylénés (OE) et/ou propoxylénés (OP), présentant en moyenne de 0,5 à 60 motifs OE et/ou OP ;

. les sels d'acides gras saturés ou insaturés en $C_8$-$C_{24}$, de préférence en $C_{14}$-$C_{20}$, les alkylbenzènesulfonates en $C_9$-$C_{20}$, les alkylsulfonates primaires ou secondaires en $C_8$-$C_{22}$, les alkylglycérol sulfonates, les acides polycarboxyliques sulfonés décrits dans GB-A-1 082179, les sulfonates de paraffine, les N-acyl N-alkyltaurates, les alkylphosphates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates ; le cation étant un métal alcalin (sodium, potassium, lithium), un reste ammonium substitué ou non substitué (méthyl-, diméthyl-, triméthyl-, tetraméthylammonium, diméthylpiperidinium...) ou dérivé d'une alcanolamine (monoéthanolamine, diéthanolamine, triéthanolamine...) ;

<u>*Agents tensioactifs non-ioniques*</u>

. les alkylphénols polyoxyalkylénés (polyoxyéthylénés, polyoxypropylénés, polyoxybutylénés) dont le substituant alkyle est en $C_6$-$C_{12}$ et contenant de 5 à 25 motifs oxyalkylènes ; à titre d'exemple, on peut citer les TRITON X-45, X-114, X-100 ou X-102 commercialisés par Rohm & Haas Cy. ;

. les glucosamide, glucamide, glycérolamide ;

. les alcools aliphatiques en $C_8$-$C_{22}$ polyoxyalkylénés contenant de 1 à 25 motifs oxyalkylènes (oxyéthylène, oxypropylène) ; à titre d'exemple, on peut citer les TERGITOL 15-S-9, TERGITOL 24-L-6 NMW commercialisés par Union Carbide Corp., NEODOL 45-9, NEODOL 23-65, NEODOL 45-7, NEODOL 45-4 commercialisés par Shell Chemical Cy., KYRO EOB commercialisé par The Procter & Gamble Cy. ;

. les produits résultant de la condensation de l'oxyde d'éthylène, le composé résultant de la condensation de l'oxyde de propylène avec le propylène glycol, tels les PLURONIC commercialisés par BASF ;

. les produits résultant de la condensation de l'oxyde d'éthylène, le composé résultant de la condensation de l'oxyde de propylène avec l'éthylènediamine, tels les TETRONIC commercialisés par BASF ;

. les oxydes d'amines tels que les oxydes d'alkyl $C_{10}$-$C_{18}$ diméthylamines, les oxydes d'alkoxy $C_8$-$C_{22}$ éthyl dihydroxy éthylamines ;

. les alkylpolyglycosides décrits dans US-A-4 565 647 ;
. les amides d'acides gras en $C_8$-$C_{20}$ ;
. les acides gras éthoxylés ;
. les amides gras éthoxylés ;
. les amines éthoxylées.

*Agents tensioactifs amphotères et zwitterioniques*

. les alkyldiméthylbétaïnes, les alkylamidopropyldiméthylbétaïnes, les alkyltriméthylsulfobétaïnes, les produits de condensation d'acides gras et d'hydrolysats de protéines ;
. les alkylamphoacétates ou alkylamphodiacétates dont le groupe alkyle contient de 6 à 20 atomes de carbone.

Les adjuvants de détergence ("builders") améliorant les propriétés des agents tensioactifs, peuvent être mis en oeuvre en quantités correspondant à environ 5-50%, de préférence à environ 5-30% en poids pour les formules détergentes liquides ou à environ 10-80%, de préférence 15-50% en poids pour les formules détergentes en poudres, adjuvants de détergence tels que :

*Adjuvants de détergence inorganiques*

. les polyphosphates (tripolyphosphates, pyrophosphates, orthophosphates, hexamétaphosphates) de métaux alcalins, d'ammonium ou d'alcanolamines
. les tetraborates ou les précurseurs de borates ;
. les silicates, en particulier ceux présentant un rapport $SiO_2/Na_2O$ de l'ordre de 1,6/1 à 3,2/1 et les silicates lamellaires décrits dans US-A-4 664 839 ;
. les carbonates (bicarbonates, sesquicarbonates) alcalins ou alcalino-terreux ;
. les cogranulés de silicates hydratés de métaux alcalins et de carbonates de métaux alcalins (sodium ou de potassium) riches en atomes de silicium sous forme Q2 ou Q3, décrits dans EP-A-488 868 ;
. les aluminosilicates cristallins ou amorphes de métaux alcalins (sodium, potassium) ou d'ammonium, tels que les zéolithes A, P, X... ; la zéolithe A de taille de particules de l'ordre de 0,1-10 micromètres est préférée.

*Adjuvants de détergence organiques*

. les polyphosphonates hydrosolubles (éthane 1-hydroxy-1, 1-diphosphonates, sels de méthylène diphosphonates...) ;
. les sels hydrosolubles de polymères ou de copolymères carboxyliques ou leurs sels hydrosolubles tels que :

- les éthers polycarboxylates (acide oxydisuccinique et ses sels, tartrate monosuccinic acide et ses sels, tartrate disuccinic acide et ses sels) ;
- les éthers hydroxypolycarboxylates ;
- l'acide citrique et ses sels, l'acide mellitique, l'acide succinique et leurs sels ;
- les sels d'acides polyacétiques (éthylènediaminetetraacétates, nitrilotriacétates, N-(2 hydroxyéthyl)-nitrilodiacétates) ;
- les acides alkyl $C_5$-$C_{20}$ succiniques et leurs sels (2-dodécénylsuccinates, lauryl succinates) ;
- les esters polyacétals carboxyliques ;
- l'acide polyaspartique, l'acide polyglutamique et leurs sels ;
- les polyimides dérivés de la polycondensation de l'acide aspartique et/ou de l'acide glutamique ;
- les dérivés polycarboxyméthylés de l'acide glutamique ou d'autres acides aminés.

La formulation détergente peut comprendre en outre au moins un agent de blanchiment libérant de l'oxygène comprenant un percomposé, de préférence un persel.
Ledit agent de blanchiment peut être présent en une quantité correspondant à environ 1 à 30%, de préférence de 4 à 20% en poids par rapport à la formulation détergente.

Comme exemples de percomposés susceptibles d'être utilisés comme agents de blanchiment, il convient de citer notamment les perborates tels que le perborate de sodium monohydraté ou tétrahydraté ; les composés peroxygénés tels que le carbonate de sodium peroxyhydraté, le pyrophosphate peroxyhydraté, l'urée peroxyhydratée, le peroxyde de sodium, le persulfate de sodium.
Les agents de blanchiment préférés sont le perborate de sodium, mono- ou tétrahydraté et/ou le carbonate de sodium peroxyhydraté.
Lesdits agents sont généralement associés à un activateur de blanchiment générant in situ dans le milieu lessiviel, un peroxyacide carboxylique, en une quantité correspondant à environ 0,1 à 12%, de préférence de 0,5 à 8% en poids par rapport à la formulation détergente. Parmi ces activateurs, on peut mentionner, la tétraacétyléthylènediamine, la tétraacétylméthylènediamine, le tétraacétylglycoluryle, le p-acétoxybenzènesulfonate de sodium, le pentaacétylglucose, l'octaacétyllactose.
Peuvent également être mentionnés des agents de blanchiment non oxygénés, agissant par photoactivation en présence d'oxygène, agents tels que les phtalocyanines d'aluminium et/ou de zinc sulfonées.
La formulation détergente peut comprendre en outre des agents anti-salissure ("soil release") autres, anti-redéposition autres, chélatants, dispersants, de fluorescence, suppresseurs de mousse, adoucissants, des enzymes et autres additifs divers.

*Agents anti-salissures*

Ils peuvent être mis en oeuvre en quantités d'environ 0,01-10%, de préférence environ 0,1-5%, et plus préférentiellement de l'ordre de 0,2-3% en poids.
On peut citer plus particulièrement les agents tels que :

- les dérivés cellulosiques tels que les hydroxyéthers de cellulose, la méthylcellulose, l'éthylcellulose, l'hydroxypropyl méthylcellulose, l'hydroxybutyl méthylcellulose ;
- les polyvinylesters greffés sur des troncs polyalkylènes tels que les polyvinylacétates greffés sur des troncs polyoxyéthylènes (EP-A-219 048) ;
- les alcools polyvinyliques ;
- les copolymères polyesters à base de motifs éthylène téréphtalate et/ou propylène téréphtalate et polyoxyéthylène téréphtalate, avec un rapport molaire (nombre de motifs) éthylène téréphtalate et/ou propylène téréphtalate/(nombre de motifs) polyoxyéthylène téréphtalate de l'ordre de 1/10 à 10/1, de préférence de l'ordre de 1/1 à 9/1, les polyoxyéthylène téréphtalates présentant des unités polyoxyéthylène ayant un poids moléculaire de l'ordre de 300 à 5000, de préférence de l'ordre de 600 à 5000 (US-A-3,959,230, US-A-3,893,929, US-A-4,116,896, US-A-4,702,857, US-A-4,770,666) ;
- les oligomères polyesters sulfonés obtenus par sulfonation d'un oligomère dérivé de l'alcool allylique éthoxylé, du diméthyltéréphtalate et du 1,2-propylènediol, présentant de 1 à 4 groupes sulfonés (US-A-4 968 451) ;
- les copolymères polyesters à base de motifs propylène téréphtalate et polyoxyéthylène téréphtalate et terminés par des motifs éthyles, méthyles (US-A-4,711,730) ou des oligomères polyesters terminés par des groupes alkylpolyéthoxy (US-A-4,702,857) ou des groupes anioniques sulfopolyéthoxy (US-A-4,721,580), sulfoaroyles (US-A-4,877,896) ;
- les copolymères polyesters sulfonés dérivés d'acide, anhydride ou diester téréphtalique, isophtalique et sulfoisophtalique et d'un diol (FR-A-2 720 399).

*Agents anti-redéposition,*

Ils peuvent être mis en oeuvre en quantités généralement d'environ 0,01-10% en poids pour une formulation détergente en poudre, d'environ 0,01-5% en poids pour une formulation détergente liquide.
On peut citer notamment les agents tels que :

- les monoamines ou polyamines éthoxylées, les polymères d'amines éthoxylées (US-A-4,597,898, EP-A-11 984) ;
- la carboxyméthylcellulose ;
- les oligomères polyesters sulfonés obtenus par condensation de l'acide isophtalique, du sulfosuccinate de diméthyle et de diéthylène glycol (FR-A-2 236 926) ;
- les polyvinylpyrollidones.

*Agents chélatants*

Les agents chélatants du fer et du magnésium, peuvent être présents en quantités de l'ordre de 0,1-10%, de

préférence de l'ordre de 0,1-3% en poids.

On peut mentionner entre autres :

- les aminocarboxylates tels que les éthylènediaminetétraacétates, hydroxyéthyléthylènediaminetriacétates, nitrilotriacétates ;
- les aminophosphonates tels que les nitrilotris-(méthylènephosphonates) ;
- les composés aromatiques polyfonctionnels tels que les dihydroxydisulfobenzènes.

*Agents dispersants polymériques,*

Ils peuvent être présents en quantité de l'ordre de 0,1-7% en poids, pour contrôler la dureté en calcium et magnésium, agents tels que

. les sels hydrosolubles d'acides polycarboxyliques de masse moléculaire de l'ordre de 2 000 à 100 000, obtenus par polymérisation ou copolymérisation d'acides carboxyliques éthyléniquement insaturés tels que acide acrylique, acide

ou anhydride maléique, acide fumarique, acide itaconique, acide aconitique, acide mésaconique, acide citraconique, acide méthylènemalonique, et tout particulièrement les polyacrylates de masse moléculaire de l'ordre de 2 000 à 10 000 (US-A-3,308,067), les copolymères d'acide arylique et d'anhydride maléique de masse moléculaire de l'ordre de 5 000 à 75 000 (EP-A-66 915)

- les polyéthylèneglycols de masse moléculaire de l'ordre de 1 000 à 50 000.

*Agents de fluorescence (brighteners),*

Ils peuvent être présents en quantité d'environ 0,05-1,2% en poids, agents tels que : les dérivés de stilbène, pyrazoline, coumarine, acide fumarique, acide cinnamique, azoles, methinecyanines, thiophènes... ("The production and application of fluorescent brightening agents" - M. Zahradnik, publié par John Wiley & Sons, New York -1982).

*Agents suppresseurs de mousses,*

Ils peuvent être présents en quantités pouvant aller jusqu'à 5% en poids, agents tels que :

. les acides gras monocarboxyliques en $C_{10}$-$C_{24}$ ou leurs sels alcalins, d'ammonium ou alcanolamines, les triglycérides d'acides gras ;
. les hydrocarbures saturés ou insaturés aliphatiques, alicycliques, aromatiques ou hétérocycliques, tels que les paraffines, les cires ;
. les N-alkylaminotriazines ;
. les monostéarylphosphates, les monostéarylalcoolphosphates ;
. les huiles ou résines polyorganosiloxanes éventuellement combinées avec des particules de silice.

*Agents adoucissants*

Ils peuvent être présents en quantités d'environ 0,5-10% en poids, agents tels que les argiles.

*Enzymes*

Elles peuvent être présentes en une quantité pouvant aller jusqu'à 5 mg en poids, de préférence de l'ordre de 0,05-3 mg d'enzyme active/g de formulation détergente, enzymes telles que :

. les protéases, amylases, lipases, cellulases, peroxydases (US-A-3,553,139; US-A-4,101,457 ; US-A-4,507,219 ; US-A-4,261,868).

*Autres additifs*

On peut citer entre autres :

. des agents tampons,
. des parfums,
. des pigments.

La formulation de lavage peut être mise en oeuvre, notamment en lave-linge, à raison de 0,5 g/l à 20 g/l, de préférence de 2 g/l à 10 g/l pour réaliser des opérations de lavage à une température de l'ordre de 25 à 90°C.
Lorsqu'il s'agit d'une formulation aqueuse liquide de rinçage du linge, peuvent être présents, à côté du copolymère (C), d'autres constituants du type

- associations d'agents tensioactifs cationiques (diester de triéthanolamine quaternisé par du diméthylsulfate, N-méthylimidazoline tallow ester méthyl sulfate, chlorure de dialkyldiméthylammonium, chlorure d'alkylbenzyldiméthylammonium, sulfate de méthyle et d'alkylimidazolinium, sulfate de méthyle et de méthyl-bis(alkylamidoéthyl)-2 -hydroxyéthylammonium...) en quantité pouvant aller de 3 à 50%, de préférence de 4 à 30% de ladite formulation éventuellement associés à des tensioactifs non ioniques (alcools gras éthoxylés, alkylphénols éthoxylés ...) en quantité pouvant aller jusqu'à 3% ;
- des polyorganosiloxanes (0,1 à 10%)
- azurants optiques (0,1 à 0,2%);
- éventuellement agents anti-transfert de couleur (polyvinylpyrrolidone, polyvinyloxazolidone, polyméthacrylamide... 0,03 à 25%, de préférence 0,1 à 15%)
- colorants,
- parfums,
- solvants, notamment des alcools (méthanol, éthanol, propanol, isopropanol, éthylèneglycol, glycérine)
- limiteurs de mousse.

La formulation de rinçage mise en oeuvre, en lave-linge notamment, à raison de 0,2 à 10 g/l, de préférence de 2 à 10 g/l.
Lorsqu'il s'agit un additif de séchage du linge dans une machine séchante appropriée, ledit additif comprend un support solide flexible constitué par exemple par une bande de textile tissé ou non-tissé, une feuille de cellulose, imprégnée dudit copolymère (C) ; ledit additif est introduit au séchage dans le linge humide à sécher à une température de l'ordre de 50 à 80°C pendant 10 à 60 minutes.
Ledit additif peut en outre comprendre des agents adoucissants cationiques (jusqu'à 99%) et des agents anti-transfert de couleurs (jusqu'à 80%) tels que ceux mentionnés ci-dessus.
Lorsqu'il s'agit d'une formulation de repassage, celle-ci qui peut être pulvérisée directement sur le linge sec avant l'opération de repassage.
Ladite formulation de repassage peut en outre contenir des agents tensioactifs non-ioniques (de 0,5 à 5%) ou anioniques (de 0,5 à 5%), des parfums (0,1 à 3%), des dérivés cellulosiques (0,1 à 3%) comme l'amidon.
Lorsqu'il s'agit d'un additif de lavage ("prespotter"), celui-ci se présente sous forme d'une dispersion aqueuse ou d'un solide (bâton).
A côté du copolymère (C) peuvent être présents d'autres constituants du type

- tensioactifs anioniques tels que ceux déjà mentionnés ci-dessus, en quantité d'au moins 5% du poids de la composition
- tensioactifs non-ioniques tels que ceux déjà mentionnés ci-dessus, en quantité pouvant aller de 15% à 40% du poids de la composition
- des hydrocarbures aliphatiques, en quantité pouvant aller de 5% à 20% du poids de la composition.

Un troisième objet de l'invention consiste en l'utilisation, dans une composition de traitement des articles en fibres textiles, destinée à être mise en oeuvre dans une opération de lavage et/ou rinçage, détachage avant lavage, séchage dans un sèche-linge ou repassage desdits articles, d'au moins un copolymère linéaire sulfonés (C) décrit ci-dessus, comme agent antisalissure (« soil release ») et/ou antiredéposition et/ou détergent. La quantité de copolymère (C) à mettre en oeuvre et les conditions de traitement ont déjà été mentionnées ci-dessus ; il en est de même de la nature et de la quantité des différents constituants de la composition de traitement.
Un quatrième objet de l'invention consiste en un procédé pour améliorer les propriétés d'une composition destinée au lavage et/ou rinçage, détachage avant lavage, séchage dans un sèche-linge ou repassage desdits articles en fibres textiles, par addition à ladite composition d'au moins un copolymère linéaire sulfonés (C) décrit ci-dessus, en quantité efficace pour apporter auxdites compositions des propriétés d'antisalissure (« soil release ») et/ou antiredéposition et/ou détergence. La quantité de copolymère (C) à mettre en oeuvre et les conditions de traitement ont déjà été mentionnées ci-dessus ; il en est de même de la nature et de la quantité des différents constituants de la composition de traitement.

Les exemples suivants sont donnés à titre illustratif.

Analyses et mesures

Les analyses par spectroscopie RMN $^1H$ ont été effectuées sur un spectromètre Bruker AMX 300, à 300 MHz et à température ambiante dans l'acide trifluoroacétique deutéré (TFA-*d*).
La masse molaire moyenne en poids est déterminée comme suit par Chromatographie par Perméation de Gel :

> La mesure est effectuée dans un mélange dichlorométhane + 2/1000 (en volume) anhydride trifluoroacétique + 0.005M $BF_4N(Bu)_4$ à température ambiante.

Les caractéristiques de l'appareil sont les suivantes :

> Colonnes chromatographiques: 3 colonnes Phenomenex mixtes ultra haute masse, précolonne 5 µm, diamètre 3/8, longueur 60 cm
> Injecteur-pompe : Waters Alliance
> Détecteurs: (1) Réfractomètre : RI ERMA, sensibilité 16; (2) Absorption UV : UV2000 TSP bi longueur d'onde, $\lambda$ = 270nm (1DO) et $\lambda$ = 330 (1DO) et (3) Viscosimètre " home made " à perte de charge capillaire et correction des effets de débit.
> Débit : 1.5 ml/minute

La solution injectée (100 µl) contient environ 0.5% (x mg/y ml de solvant) de copolymère linéaire sulfoné solubilisé dans un mélange 95% dichlorométhane, 5% ATFA, 0.005M $BF_4N(Bu)_4$, 2/1000 toluène. Les masses molaires sont données en équivalents polystyrène.

**Exemple I**

Synthèse d'un copolymère linéaire sulfoné PEA1 à partir

- d'epsilon-caprolactame et
- d'un polyester sulfoné (PES1) de masse moléculaire moyenne en poids de 3920 et de formule moyenne

$$H\text{-}(O\text{-}CH_2\text{-}CH_2\text{-})_n\text{-}[\text{-}O\text{-}C(O)\text{-}Q\text{-}C(O)\text{-}(O\text{-}CH_2\text{-}CH_2\text{-})_n\text{-}]_y\ H$$

avec des quantités mineures de polyester sulfoné de formule moyenne

$$H\text{-}[\text{-}O\text{-}C(O)\text{-}Q\text{-}C(O)\text{-}(O\text{-}CH_2\text{-}CH_2\text{-})_n\text{-}]_y\ H$$

formules dans lesquelles

- n est égal à 1,6
- y est égal à 8
- Q est constitué à :
  - . 83% molaire par un reste 1,4-phénylène
  - . 3 % molaire par un reste 1,3-phénylène
  - . et 15% molaire par un reste sodio-oxysulfonyl-5 1 ,3-phénylène.

22,4 g d'$\varepsilon$-caprolactame et 37,4 g du polyester sulfoné (PES1) sont introduits dans un réacteur muni d'une agitation mécanique (type ancre) et d'un réfrigérant et chauffé par un bain d'alliage de Wood thermorégulé. Après purge à l'argon, le milieu est porté à 100°C. Après la mise en route de l'agitation (45 tours/minute), 50 µl d'une solution d'acide hypophosphoreux à 50% dans l'eau sont ajoutés. Le réacteur est placé sous ciel d'argon ; le milieu est porté à 250°C, à raison d'une montée en température de 4°C par minute. Après 7 h d'agitation à 250°C, le contenu du réacteur est coulé sur une plaque de téflon (polytétrafluoroéthylène).
Le copolymère linéaire sulfoné PEA1 obtenu présente une masse molaire moyenne en poids de 5 030 g/mol déterminée par chromatographie à Perméation de Gel. Son analyse par spectroscopie RMN $^1H$ a montré qu'il contient des blocs polyamide 6 de degré de polymérisation moyen de 1,7 répartis à 41 % sous la forme d'extrémités de chaînes de type

(V) et à 59% sous la forme d'unités « esteramides » (I) et que le rapport massique des restes issus du polyester sulfoné (PES1) et de l'ε-caprolactame dans le copolymère PEA1 est de 66/34.

**Exemple II** :

On répète l'opération décrite à l'exemple I, en partant de 13,8g d'ε-caprolactame, 46,2 g de polyester sulfoné (PES1) et 32 μl de solution d'acide hypophosphoreux à 50% dans l'eau.
La masse molaire moyenne en poids du copolymère linéaire sulfoné obtenu PEA2 est de 4 110 g/mol. Le degré de polymérisation moyen des blocs polyamide 6 est de 1,35. Les blocs polyamide 6 sont répartis à 45% sous la forme d'extrémités de chaînes de type (V) et à 55% sous la forme d'unités « esteramides » (I) et le rapport massique des restes issus du polyester sulfoné (PES1) et de l'ε-caprolactame dans le copolymère PEA2 est de 78/22.

**Exemple III :**

On répète l'opération décrite à l'exemple I, en partant de 7,8g d'ε-caprolactame, 52,2 g de polyester sulfoné (PES1) et 20 μl de solution d'acide hypophosphoreux à 50% dans l'eau.
La masse molaire moyenne en poids du copolymère linéaire sulfoné obtenu PEA3 est de 4 710 g/mol. Le degré de polymérisation moyen des blocs polyamide 6 est de 1,28. Les blocs polyamide 6 sont répartis à 45% sous la forme d'extrémités de chaînes de type (V) et à 55% sous la forme d'unités « esteramides » (I) et le rapport massique des restes issus du polyester sulfoné (PES1) et de l'ε-caprolactame dans le copolymère PEA3 est de 88/12.

**Exemple IV** :

Synthèse d'un copolymère linéaire sulfoné PEA4 à partir de polyamide 6 (masse molaire moyenne en poids de 42 000 g/mol) et de polyester sulfoné (PES1).

22,5 g de polyester sulfoné (PES1), 7,5 g de polyamide 6 et 32 mg d'acétate de zinc dihydrate sont introduits dans un réacteur muni d'une agitation mécanique (type ancre) et d'un récepteur et chauffé par un bain d'alliage de Wood thermorégulé. Après purge par 3 cycles vide-argon, le milieu est porté à 100°C. Après mise en route de l'agitation (60 tours/min), on augmente la température jusqu'à 250°C en 30 minutes. Après 6 h d'agitation à 250°C, le contenu du réacteur est coulé sur une plaque de téflon (polytetrafluoroéthylène).
Le copolymère linéaire sulfoné PEA4 présente une masse molaire moyenne en poids de 5 570 g/mol déterminée par chromatographie à Perméation de Gel. Son analyse par spectroscopie RMN $^1H$ a montré qu'il contient des blocs polyamide 6 de degré de polymérisation moyen de 1,3 répartis à 45% sous la forme d'extrémités de chaînes de type (V) et à 55% sous la forme d'unités « esteramides » (I) et que le rapport massique des restes issus du polyester sulfoné (PES1) et de polyamide 6 dans le copolymère PEA4 est de 78/22.

**Exemple V :**

On répète l'opération décrite à l'exemple IV, en partant de 5,0 g de polyamide 6, 45,5 g de polyester sulfoné (PES1) et 50 mg d'acétate de zinc dihydrate.
La masse molaire moyenne en poids du copolymère linéaire sulfoné obtenu PEA5 est de 18 900 g/mol. Le degré de polymérisation moyen des blocs polyamide 6 est de 1,40. Les blocs polyamide 6 sont répartis à 45% sous la forme d'extrémités de chaînes de type (V) et à 55% sous la forme d'unités « esteramides » (I) et le rapport massique des restes issus du polyester sulfoné (PES1) et de polyamide 6 dans le copolymère PEA5 est de 91/9.

**Exemple VI** :

PROPRIETES ANTISALISSURES

Les polymères antisalissures à tester sont introduits dans la composition détergente à base d'agents tensioactifs anioniques pour lave-linge du tableau 1, à raison de 1% en poids de matière active de copolymère (C) selon l'invention.

Test

Prélavage :

Des carrés de dimension 10x10 cm, en

- polyester tissé désapprêté trois fois à l'eau permutée (4 éprouvettes 12,5 x 10 cm)
- polyester tricoté (4 éprouvettes 12,5 x 10 cm)
- polyamide (4 éprouvettes 12,5 x 10 cm)

sont prélavés dans un TERGOTOMETRE pendant 20 minutes à 40°C (agitation de 100 cycles/minute), avec la formule lessivielle du Tableau 1 à base d'agents tensioactifs anioniques, contenant 1% en poids de matière active de polymère à tester ; l'eau utilisée présente une dureté de 30°HT (eau de Contrexeville ; la quantité de lessive mise en oeuvre est de 5 g pour 1 litre d'eau.
Les carrés de tissus sont ensuite rinçés 3 fois pendant 5 minutes à l'eau du robinet, puis séchés à l'étuve.

On mesure la réflectance R1 des éprouvettes à l'aide d'un réflectomètre à l'aide du colorimètre DR. LANGE/ LUCI 100, selon le système "L", "a" et "b" (échelle du noir au blanc, du vert au rouge et du bleu au jaune).

$$[R1 = (L1^2+a1^2+b1^2)^{1/2}]$$

Tachage :

Les éprouvettes prélavées sont ensuite tachées par dépôt sur chaque éprouvette,

- soit de 4 gouttes superposées d'huile de vidange (Dirty Motor Oil « DMO ») au milieu de l'éprouvette
- soit de 4 gouttes superposées d'huile de soja colorée par du pigment violet (« violet dye ») au milieu de l'éprouvette,

et, afin d'assurer une bonne fixation de la tache, les tissus sont séchés à l'étuve.
On mesure la réflectance R2 des éprouvettes après tachage, selon le système "L" "a" et "b".

$$[R2 = (L2^2+a2^2+b2^2)^{1/2}]$$

Lavage:

On effectue le lavage de 6 éprouvettes (2 en polyester tricoté, 2 en polyester tissé et 2 en polyamide) séparément selon le type de tache, et ce dans les mêmes conditions que celles du prélavage (à 40°C pendant 20 minutes, à l'aide de 5 g de lessive contenant 1% de matière active de polymère pour 1 litre d'eau de 30°HT, puis 3 rinçages de 5 minutes à l'eau froide et séchage).
On mesure la réflectance R3 après lavage des éprouvettes tachées, selon le système "L", "a" et "b".

$$[R3 = (L3^2+a3^2+b3^2)^{1/2}]$$

Evaluation

L'efficacité du polymère testé en tant qu'agent antisalissure vis-à-vis des taches d'huile de soja colorées par un pigment violet (« violet dye »), est appréciée par le % d'élimination des taches calculées par la formule

$$\Delta E \text{ en } \% = 100 \times (R3-R2)/(R1-R2)$$

L'efficacité du polymère testé en tant qu'agent antisalissure vis-à-vis des taches d'huile de vidange (DMO) est appréciée par le % d'élimination des taches calculées par la formule

$$\Delta L \text{ en } \% = 100 \times (L3-L2)/(L1-L2)$$

Les résultats obtenus figurent au tableau 1a et sont comparés à ceux obtenus :

- avec la même composition détergente, mais exempte de copolymère (C)

- avec la même composition détergente, mais contenant, en lieu et place du copolymère (C), le polyester sulfoné (PES1) de départ, ne contenant pas d'unités «esteramides» décrit ci-dessus à l'exemple I.

On constate que, dans une composition à base de tensioactifs anioniques, le copolymère (C) présente d'excellentes performances comme agent anti-salissure envers l'huile de vidange (DMO) sur polyamide ; ces performances sont supérieures à celles du polyester sulfoné (PES1) de l'art antérieur. Ses performances sont très voisine de celles du polyester sulfoné (PES1) de l'art antérieur envers le « violet dye », et ce, que soit sur polyamide ou polyester.

**Exemple VII :**

On répète le test antisalissure décrit à l'exemple VI, en mettant en oeuvre la composition détergente pour lave-linge figurant au Tableau 2, à base d'un mélange d'agents tensioactifs anioniques et non-ioniques.
Les résultats obtenus figurent au tableau 2a et sont comparés à ceux obtenus :

- avec la même composition détergente, mais exempte de copolymère (C)
- avec la même composition détergente, mais contenant, en lieu et place du copolymère (C), le polyester sulfoné (PES1) de départ, ne contenant pas d'unités « esteramides » décrit ci-dessus à l'exemple I.

On constate que, dans une composition à base d'un mélange de tensioactifs anioniques et non-ioniques, le copolymère (C) présente d'excellentes performances comme agent anti-salissure envers l'huile de vidange (DMO) et le « violet dye » sur polyamide ; ces performances sont supérieures à celles du polyester sulfoné (PES1) de l'art antérieur. Ses performances sont très voisines de celles du polyester sulfoné (PES1) de l'art antérieur envers le « violet dye » sur polyester.

Tableau 1

| Composition | Parties en poids |
|---|---|
| Zéolite 4A | 25 |
| Disilicate de sodium | 5 |
| Carbonate de sodium | 15 |
| Copolymère maléïque/acrylique SOKALAN CP5 (BASF) | 5 |
| Carboxyméthylcellulose | 1 |
| Perborate monohydraté | 15 |
| Tétraacétyléthylènediamine | 5 |
| Laurylbenzènesulfonate | 13 |
| Espérase 6T | 0,3 |
| Copolymère (C) | 1 |
| Sulfate de sodium | qsp 100 |

**Tableau 1a**

| | **Polyester tissé** | **Polyester tricoté** | **Polyamide** | |
|---|---|---|---|---|
| | **Violet dye** | **Violet dye** | **DMO** | **Violet dye** |
| **Copolymère (C)** | **ΔE** | **ΔE** | **ΔL** | **ΔE** |
| - | 35,8 | 30,2 | 61 | 82,7 |
| **PEA1** | 99,5 | 97,8 | 73,1 | 81,9 |
| **PEA2** | 99 | 99,8 | 68,2 | 82,3 |
| **PEA3** | 98,5 | 98,1 | 66,3 | 85,3 |
| **PEA4** | 98,1 | 99,2 | 74 | 84,1 |
| **PEA5** | 98,5 | 99,5 | 68,8 | 82,5 |

(suite)

| | Polyester tissé | Polyester tricoté | Polyamide | |
|---|---|---|---|---|
| | Violet dye | Violet dye | DMO | Violet dye |
| **Polyester sulfoné (PES1)** | 98,7 | 100 | 62,7 | 83 |

Tableau 2

| Composition | Parties en poids |
|---|---|
| Zéolite 4A | 25 |
| Disilicate de sodium | 5 |
| Carbonate de sodium | 15 |
| Copolymère maléïque/acrylique SOKALAN CP5 (BASF) | 5 |
| Carboxyméthylcellulose | 1 |
| Perborate monohydraté | 15 |
| Tétraacétyléthylènediamine | 5 |
| Laurylbenzènesulfonate | 6 |
| SYMPERONIC A3 (alcool gras en C12-C15 éthoxylé à 3 OE) | 3 |
| SYMPERONIC A9 (alcool gras en C12-C15 éthoxylé à 9 OE) | 9 |
| Espérase 6T | 0,3 |
| Copolymère (C) | 1 |
| Sulfate de sodium | qsp 100 |

Tableau 2a

| | Polyester tissé | Polyester tricoté | Polyamide | |
|---|---|---|---|---|
| | Violet dye | Violet dye | DMO | Violet dye |
| **Copolymère (C)** | ΔE | ΔE | ΔL | ΔE |
| - | 1,5 | 28,8 | 78,9 | 78,9 |
| **PEA2** | 99 | 99,8 | 90,1 | 92,4 |
| **PEA3** | 98,5 | 98,7 | 93,9 | 91,8 |
| **Polyester sulfoné (PES1)** | 97,3 | 100 | 88 | 87,1 |

**Revendications**

**1.** Copolymères linéaires sulfonés (C) hydrosolubles ou hydrodispersables, **caractérisés en ce qu'**ils comprennent :

➢ **(i)** des chaînes polyesteramides linéaires ($C_1$), éventuellement des chaînes polyesters linéaires ($C_2$), et éventuellement des chaînes polyamides ($C_3$),

♦ **(i1)** lesdites chaînes polyesteramides linéaires ($C_1$) consistant essentiellement en

• au moins une unité « esteramide » de formule générale (I)

$$[\text{-C(O)-Q-C(O)-\{NR'-W-C(O)\}}_m\text{-(O-R-)}_n\text{-O-}] \qquad \text{(I)}$$

où

* le symbole Q représente

. un reste (NQ) mono- ou poly-arylène non-ionique ou alkylène non-ionique,
. ou un reste (SQ) mono- ou poly-arylène sulfoné ou alkylène sulfoné porteur d'au moins une fonction acide sulfonique ou sulfonate,

* R' est H ou un reste alkylène contenant de 1 à 4 atomes de carbone,
* W est un reste alkylène non-ionique ou arylène non-ionique contenant de 1 à 20 atomes de carbone, de préférence de 1 à 12 atomes de carbone,
* R est un reste alkylène linéaire ou ramifié contenant de 2 à 4 atomes de carbone, éthylène de préférence,
* m est égal à au moins 1,
* n va de 1 à 4 ;

et éventuellement, en
• au moins une unité « ester » de formule générale (II)

$$[-C(O)-Q-C(O)-(O-R-)_n-O-] \quad (II)$$

où
les symboles Q, R et n ont la définition donnée ci-dessus ;
♦ **(i2)** lesdites chaînes polyesters linéaires ($C_2$) éventuelles ayant pour formule générale (III)

$$[-C(O)-Q-C(O)-(O-R-)_n-O-]_x \quad (III)$$

où

* les symboles Q, R et n ayant la définition donnée ci-dessus,
* x est supérieur à 1,

le pourcentage molaire des groupes de formule -C(O)-Q-C(O)- où Q est un reste sulfoné (SQ), par rapport à l'ensemble des motifs de formule -C(O)-Q-C(O)- dans les unités ou chaînes de formules (I), (II) et (III) étant de 5 à 40, de préférence de 7 à 35 ;
♦ **(i3)** lesdites chaînes polyamides ($C_3$) éventuelles ayant pour formule générale (IV)

$$-\{NR'-W-C(O)\}_z- \quad (IV)$$

où:

* R' et W ont la définition donnée ci-dessus,
* z est supérieur à 1 ;

➢ et **(ii)**

♦ **(ii1)** en extrémités de chaîne ($C_1$),

• un groupement « amide » de formule (V)

$$HO-[(O)C-W-NR')-]_p \quad (V)$$

où

* les symboles W et R' ont la définition donnée ci-dessus,
* p est égal à au moins 1 ;

et/ou
• un groupement de formule (VI1)

$$Z\text{-}(O\text{-}R)_n\text{-}O\text{-} \qquad (VI1)$$

où:

* R et n ont la définition donnée ci-dessus,
* Z représente

. H,
. un groupe sulfobenzoyle,
. un groupe sulfoalkyle contenant de 2 à 30 atomes de carbone,
. un groupe phenylsulfonate ;

et/ou :

• un groupement de formule (VII1)

$$Y\text{-}O\text{-} \qquad (VII1)$$

où Y représente H ou un radical alkyle comprenant de 1 à 30 atomes de carbone, méthyle de préférence ;
et/ou :
• un reste -Y de définition donnée ci-dessus, lié à un atome d'oxygène d'une fonction ether de la chaîne ($C_1$) ;

♦ **(ii2)** en extrémités de chaîne ($C_2$),

• un groupement de formule (VI2)

$$Z\text{-}(O\text{-}R)_n\text{-}O\text{-} \qquad (VI2)$$

où:

. R, Z et n ont la définition donnée ci-dessus ;
et/ou :

• un groupement de formule (VII2)

$$Y\text{-}O\text{-} \qquad (VII2)$$

où Y a la définition donnée ci-dessus ;
et/ou :

• un reste -Y de définition donnée ci-dessus, lié à un atome d'oxygène d'une fonction ether de la chaîne ($C_2$) ;

♦ **(ii3)** et, en extrêmités de chaîne ($C_3$),

• un atome d'hydrogène lié à un atome d'azote de la chaîne ($C_3$) ;
• et une fonction -OH liée à un reste carbonyle -C(O)- de la chaîne ($C_3$) ;
- lesdites unités des chaînes ($C_1$) étant

. liées entre elles ou aux extrémités de chaînes **(ii1)** de formules (VI1) et (VII1) par des liaisons

esters,

. liées aux extrémités de chaînes **(<u>ii1</u>)** de formule (V) par des liaisons amides ;

- la chaîne ($C_2$) étant liée aux extrêmités de chaîne **(<u>ii2</u>)** de formules (VI2) et (VII2) par des liaisons esters ;
- le nombre d'unités de formules (I) et (II) des chaînes ($C_1$), les valeurs de <u>m,</u> de <u>p</u>, de <u>x</u> et de <u>z</u> étant telles que la masse molaire moyenne en poids desdits copolymères linéaires sulfonés (C) est de 500 à 80 000 g/mol, de préférence de 1 500 à 80 000 g/mol, tout particulièrement de 3000 à 20 000 g/mol ;
- la valeur de <u>m</u>, de <u>m</u>+<u>p,</u> de <u>m</u>+<u>z</u> ou de <u>m</u>+<u>p</u>+<u>z</u> lorsque un ou des groupes « amides » de formule (V) et/ou une ou des chaînes polyamides ($C_3$) sont présents, étant telle que le rapport du nombre de groupes -C(O)-Q-C(O)- au nombre de groupes -(NR'-W-C(O)- présents dans lesdits copolymères linéaires sulfonés (C) soit compris entre 1/99 et 99/1, de préférence entre 10/90 et 99/1, tout particulièrement entre 40/60 et 95/5.

**2.** Copolymères linéaires sulfonés (C) selon la revendication 1), **caractérisés en ce que** les chaînes polyesteramides ($C_1$) consistent essentiellement en

• au moins une unité de formule (I')

$$[-C(O)-Q-C(O)-\{NR'-W-C(O)\}_m-(O-CH_2-CH_2-)_n-O-] \qquad (I')$$

et, éventuellement, en

• au moins une unité de formule (II')

$$[-C(O)-Q-C(O)-(O-CH_2-CH_2-)_n-O] \qquad (II')$$

**3.** Copolymères linéaires sulfonés (C) selon la revendication 2), **caractérisés en ce que** les groupements de formule (V) ci-dessus et/ou de formule (VI'1)

$$H-(O-CH_2-CH_2-)_n-O \qquad (VI'1)$$

et/ou un atome d'hydrogène H sont présents en extrêmités des chaînes ($C_1$).

**4.** Copolymères linéaires sulfonés (C) selon l'une quelconque des revendications 1) à 3), **caractérisés en ce que** les chaînes polyesters ($C_2$) éventuelles ont pour formule générale (III')

$$[-C(O)-Q-C(O)-(O-CH_2-CH_2-)_n-O]_x \qquad (III')$$

**5.** Copolymères linéaires sulfonés (C) selon la revendication 4), **caractérisés en ce que** les groupements de formule (VI'2)

$$H-(O-CH_2-CH_2-)_n-O \qquad (VI'2)$$

et/ou un atome d'hydrogène H sont présents en extrêmités des chaînes ($C_2$).

**6.** Copolymères linéaires sulfonés (C) selon l'une quelconque des revendications 2) à 5), **caractérisés en ce que** le pourcentage molaire des restes de formule $(O-CH_2-CH_2-)_n$ où <u>n</u> est égal à 1, par rapport à l'ensemble des restes de formule $(O-CH_2-CH_2-)_n$ où <u>n</u> est égal à 1, 2, 3 et 4 dans les unités ou extrêmité(s) de formule (I'), (II'), (VI'1), (III') et (VI'2) est de 10 à 80, de préférence de 20 à 60.

**7.** Copolymères linéaires sulfonés (C) selon l'une quelconque des revendications 1) à 6), **caractérisés en ce que** les restes non-ioniques (NQ) des unités de formules (I), (II), et (III) sont choisis parmi les restes mono- ou poly-arylènes non-ioniques en $C_6$-$C_{14}$ et les restes alkylènes non-ioniques en $C_1$-$C_9$ linéaires ou ramifiés.

**8.** Copolymères linéaires sulfonés (C) selon la revendication 7), **caractérisés en ce que** les restes non-ioniques (NQ) sont des restes 1,4-phénylène (NQ1) ou 1,3-phénylène (NQ2).

**9.** Copolymères linéaires sulfonés (C) selon la revendication 7) ou 8), **caractérisés en ce que** les restes non-ioniques (NQ) des unités de formules (I), (II) et (III) sont des restes 1,4-phénylène (NQ1) ou un mélange de restes 1,4-phénylène (NQ1) et 1,3-phénylène (NQ2), le pourcentage molaire des motifs de formule -C(O)-Q-C(O)- où Q est un reste (NQ1) par rapport à l'ensemble des motifs de formule -C(O)-Q-C(O)- où Q est un reste non-ionique (NQ) étant de 50 à 100, de préférence de 70 à 90.

**10.** Copolymères linéaires sulfonés (C) selon l'une quelconque des revendications 1) à 9), **caractérisés en ce que** les restes sulfonés (SQ) des unités de formules (I), (II) et (III) sont choisis parmi les restes mono- ou poly-arylènes en $C_6$-$C_{14}$ sulfonés et les restes alkylènes linéaires ou ramifiés en $C_1$-$C_9$ sulfonés porteurs d'au moins une fonction acide sulfonique, de préférence sous forme d'un sulfonate de métal alcalin ou de tetraalkylammonium.

**11.** Copolymères linéaires sulfonés (C) selon la revendication 10), **caractérisés en ce que** le reste sulfoné (SQ) un reste sodio-oxysulfonyl-5 1,3-phénylène.

**12.** Copolymères linéaires sulfonés (C) selon l'une quelconque des revendications 1) à 11), **caractérisés en ce que** le symbole W dans les formules (I), (I'), (IV) et (V) représente un reste éthylène, triméthylène, tetraméthylène, pentaméthylène, heptaméthylène, décaméthylène, undécaméthylène, phénylène.

**13.** Copolymères linéaires sulfonés (C) selon l'une quelconque des revendications 1) à 12), **caractérisés en ce que** le symbole R' dans les formules (1), (I'), (IV) et (V) représente H.

**14.** Procédé de préparation des copolymères linéaires sulfonés (C) faisant l'objet de l'une quelconque des revendications 1) à 13), par réaction :

. d'insertion/polymérisation, en présence d'un catalyseur d'insertion/polymérisation, ou
. d'aminolyse/acidolyse/polycondensation, en présence d'un catalyseur d'aminolyse/acidolyse/polycondensation, ou
. d'échange ester/amide, en présence d'un catalyseur d'échange ester/amide,

en milieu fondu,

(<u>**a**</u>) - d'au moins un aminoacide ou polyaminoacide (« polyamide ») de formule (VIII) ou lactame correspondant,

$$H\text{-}[NR'\text{-}W\text{-}C(O)\text{-}]_qOH \qquad (VIII)$$

où

. W et R' ont la définition donnée ci-dessus,
. <u>q</u> va de 1 à 200 de préférence de 1 à 100 ;

**(<u>b</u>)** - avec un polyester linéaire sulfoné comprenant

**(<u>b1</u>)** une chaîne polyester de formule générale (IX)

$$[\text{-}C(O)\text{-}Q\text{-}C(O)\text{-}(O\text{-}R\text{-})_n\text{-}O]_y \qquad (IX)$$

où

* le symbole Q représente

. un reste (NQ) mono- ou poly-arylène non-ionique ou alkylène non-ionique,
. ou un reste (SQ) mono- ou poly-arylène sulfoné ou alkylène sulfoné porteur d'au moins une fonction acide sulfonique ou sulfonate,

* R est un reste alkylène linéaire ou ramifié contenant de 2 à 4 atomes de carbone, éthylène de préférence,
* <u>n</u> va de 1 à 4,
* <u>y</u> est supérieur à 1 ;

et

**(b2)** en extrémités de chaîne, des groupements de formule (VI2) et/ou (VII2) et/ou Y données ci-dessus,

le pourcentage molaire des groupes de formule -C(O)-Q-C(O)- où Q est un reste sulfoné (SQ), par rapport à l'ensemble des groupes de formule -C(O)-Q-C(O)-dans les unités de formule (VIII) étant de 5 à 40, de préférence de 7 à 35 ;

• les valeurs de n et y étant telles que la masse moléculaire en poids dudit polyester est supérieure à 1 500 g/mol, de préférence entre 2000 et 10 000 g/mol ;
• les quantités relatives d'aminoacide, polyaminoacide de formule (VIII) ou lactame et de polyester linéaire sulfoné étant telles que le rapport du nombre de groupes -C(O)-Q-C(O)- mis en oeuvre par l'intermédiaire dudit polyester linéaire sulfoné au nombre de groupes -(NR'-W-C(O)- mis en oeuvre par l'intermédiaire dudit aminoacide ou polyaminoacide de formule (VIII) ou lactame soit compris entre 1/99 et 99/1, de préférence entre 10/90 et 99/1, tout particulièrement entre 40/60 et 95/5.

**15.** Procédé selon la revendication 14), **caractérisé en ce que** les aminoacides, polyaminoacides ou lactames sont choisis parmi :

. le béta-propiolactame, le gama-butyrolactame, le delta-valérolactame, l'epsilon-caprolactam, l'êta-caprylolactame, le lactam de l'acide oméga-amino undécanoïque, et les aminoacides correspondants;
. les acides para- et méta-amino benzoïques ;
. le polyamide 6, le polyamide 8, le polyamide 12, et leurs copolymères, de degré de polymérisation allant de 2 à 200, de préférence de 2 à 100.

**16.** Procédé selon la revendication 14) ou 15), **caractérisé en ce que** le polyester linéaire sulfoné mis en oeuvre comprend :

* une chaîne polyester de formule générale (IX')

$$[-C(O)-Q-C(O)-(O-CH_2-CH_2-)_n-O]_y \qquad (IX')$$

et
* en extrémités de chaîne, des groupements de formule (VI'2)

$$H-(O-CH_2-CH_2-)_n-O- \qquad (VI'2)$$

et H.

**17.** Procédé selon la revendication 16), **caractérisé en ce que** le pourcentage molaire des restes de formule $(O-CH_2-CH_2-)_n$ où n est égal à 1, par rapport à l'ensemble des restes de formule $(O-CH_2-CH_2-)_n$ où n est égal à 1, 2, 3 et 4 dans les chaînes ou extrêmité(s) de formule (IX') et (VI'2) est de 10 à 80, de préférence de 20 à 60.

**18.** Composition de traitement, des articles en fibres textiles, destinée à être mise en oeuvre dans une opération de lavage et/ou rinçage, détachage avant lavage, séchage en sèche-linge ou repassage desdits articles, comprenant de 0,01 à 70%, de préférence de 0,05 à 30%, par rapport au poids desdites compositions, d'au moins un copolymère linéaire sulfonés (C) hydrosoluble ou hydrodispersable faisant l'objet de l'une quelconque des revendications 1) à 13) ou obtenus selon le procédé faisant l'objet de l'une quelconque des revendications 14) à 17.

**19.** Composition selon la revendication 18), **caractérisée en ce qu'**elle se présente :

* sous forme d'un solide ou d'une solution ou dispersion aqueuse concentrée, mis en contact avec les articles à traiter, après dilution dans l'eau ;
* sous forme d'une solution ou dispersion aqueuse concentrée préalablement déposée sur les articles secs à traiter avant dilution dans l'eau ;
* sous forme d'une solution ou dispersion aqueuse à déposer directement sur les articles secs à traiter sans dilution ou d'un support solide comprenant ledit copolymère linéaire sulfoné (C), à appliquer directement sur les articles secs à traiter;

* sous forme d'un support solide insoluble comprenant ledit copolymère linéaire sulfoné (C) mis en contact directement avec les articles à traiter à l'état humide.

**20.** Composition selon la revendication 18) ou 19), **caractérisée en ce que** ladite composition est :

- une formulation détergente solide ou liquide comprenant de 0,01 à 10%, de préférence de 0,1 à 1% dudit copolymère (C), exprimé en sec, susceptible de former directement par dilution un bain lessiviel ;
- une formulation rinçante liquide comprenant de 0,01 à 10%, de préférence de 0,1 à 5% dudit copolymère (C), exprimé en sec, susceptible de former directement par dilution un bain de rinçage ;
- un matériau solide, textile notamment, comprenant de 0,01 à 70%, de préférence de 0,1 à 30% dudit copolymère (C), exprimé en sec, destiné à être mis en contact avec les articles humides dans un sèche-linge ;
- une formulation aqueuse de repassage comprenant de 0,01 à 50%, de préférence de 0,1 à 5% dudit copolymère (C), exprimé en sec;
- un additif de lavage comprenant de 0,01 à 10%, de préférence de 0,05 à 3% dudit copolymère (C), exprimé en sec, destiné à être déposé sur les articles secs préalablement à une opération de lavage à l'aide d'une formulation détergente contenant ou ne contenant pas ledit copolymère linéaire sulfoné (C).

**21.** Composition selon l'une quelconque des revendications 18) à 20), **caractérisée en ce que** ladite composition comprend en outre au moins un agent tensioactif et/ou un additif de détergence et/ou de rinçage et/ou de repassage des articles en fibres textiles et/ou un support solide dudit copolymère (C).

**22.** Utilisation, dans une composition de traitement des articles en fibres textiles, destinée à être mise en oeuvre dans une opération de lavage et/ou rinçage, détachage avant lavage, séchage dans un sèche-linge ou repassage desdits articles, d'au moins un copolymère linéaire sulfonés (C) faisant l'objet de l'une quelconque des revendications 1) à 13) ou obtenus selon le procédé faisant l'objet de l'une quelconque des revendications 14) à 17), comme agent antisalissure (« soil release ») et/ou antiredéposition et/ou détergent.

**23.** Utilisation selon la revendication 23), **caractérisée en ce que** ladite composition est

- une formulation détergente solide ou liquide comprenant de 0,01 à 10%, de préférence de 0,1 à 1% dudit copolymère (C), exprimé en sec, susceptible de former directement par dilution un bain lessiviel ;
- une formulation rinçante liquide comprenant de 0,01 à 10%, de préférence de 0,1 à 5% dudit copolymère (C), exprimé en sec, susceptible de former directement par dilution un bain de rinçage ;
- un matériau solide, textile notamment, comprenant de 0,01 à 70%, de préférence de 0,1 à 30% dudit copolymère (C), exprimé en sec, destiné à être mis en contact avec les articles humides dans un sèche-linge ;
- une formulation aqueuse de repassage comprenant de 0,01 à 50%, de préférence de 0,1 à 5% dudit copolymère (C), exprimé en sec;
- un additif de lavage comprenant de 0,01 à 10%, de préférence de 0,05 à 3% dudit copolymère (C), exprimé en sec, destiné à être déposé sur les articles secs préalablement à une opération de lavage à l'aide d'une formulation détergente contenant ou ne contenant pas ledit copolymère linéaire sulfoné (C).

**24.** Procédé pour améliorer les propriétés d'une composition destinée au lavage et/ou rinçage, détachage avant lavage, séchage dans un sèche-linge ou repassage desdits articles en fibres textiles, par addition à ladite composition d'au moins un copolymère linéaire sulfonés (C) faisant l'objet de l'une quelconque des revendications 1) à 13) ou obtenus selon le procédé faisant l'objet de l'une quelconque des revendications 14) à 17), en quantité efficace pour apporter auxdites compositions des propriétés d'antisalissure (« soil release ») et/ou antiredéposition et/ou détergence.

**25.** Procédé selon la revendication 24), **caractérisé en ce que** la quantité de copolymère linéaire sulfoné (C) est de 0,01 à 70%, de préférence de 0,05 à 30%, par rapport au poids desdites compositions.

**26.** Procédé selon la revendication 24) ou 25), **caractérisé en ce que** ladite composition est

- une formulation détergente solide ou liquide comprenant de 0,01 à 10%, de préférence de 0,1 à 1% dudit copolymère (C), exprimé en sec, susceptible de former directement par dilution un bain lessiviel ;
- une formulation rinçante liquide comprenant de 0,01 à 10%, de préférence de 0,1 à 5% dudit copolymère (C), exprimé en sec, susceptible de former directement par dilution un bain de rinçage ;
- un matériau solide, textile notamment, comprenant de 0,01 à 70%, de préférence de 0,1 à 30% dudit copolymère (C), exprimé en sec, destiné à être mis en contact avec les articles humides dans un sèche-linge ;

- une formulation aqueuse de repassage comprenant de 0,01 à 50%, de préférence de 0,1 à 5% dudit copolymère (C), exprimé en sec;
- un additif de lavage comprenant de 0,01 à 10%, de préférence de 0,05 à 3% dudit copolymère (C), exprimé en sec, destiné à être déposé sur les articles secs préalablement à une opération de lavage à l'aide d'une formulation détergente contenant ou ne contenant pas ledit copolymère linéaire sulfoné (C).

## Claims

**1.** A water-soluble or water-dispersible, linear sulfonated copolymer (C), **characterized in that** it comprises:

➢ **(i)** linear polyesteramide chains ($C_1$), optionally linear polyester chains ($C_2$) and optionally polyamide chains ($C_3$),

♦ **(i1)** said linear polyesteramide chains ($C_1$) being essentially composed of

• at least one "esteramide" unit of general formula (I)

$$[-C (O) -Q-C(O) -\{NR' -W-C (O) \}_m- (O-R-)_n-O-] \qquad (I)$$

where

* the symbol Q represents

• a nonionic mono- or polyarylene or nonionic alkylene residue (NQ),
• or a sulfonated mono- or polyarylene or sulfonated alkylene residue (SQ) carrying at least one sulfonic acid or sulfonate functional group,

* R' is H or an alkylene residue comprising from 1 to 4 carbon atoms,
* W is a nonionic alkylene or nonionic arylene residue comprising from 1 to 20 carbon atoms, preferably from 1 to 12 carbon atoms,
* R is a linear or branched alkylene residue comprising from 2 to 4 carbon atoms, preferably ethylene,
* m is equal to at least 1,
* n ranges from 1 to 4;
and optionally of

• at least one "ester" unit of general formula (II)

$$[-C(O)-Q-C(O)-(O-R-)_n-O-] \qquad (II)$$

where

the symbols Q, R and n have the definition given above;

♦ **(i2)** said optional linear polyester chains ($C_2$) having the general formula (III)

$$[-C(O)-Q-C(O)-(O-R-)_n-O-]_x \qquad (III)$$

where

* the symbols Q, R and n have the definition given above,
* x is greater than 1,

the molar percentage of the groups of formula -C(O)-Q-C(O)- where Q is a sulfonated residue (SQ), with respect to the combined units of formula -C(O)-Q-C(O)- in the units or chains of formulae (I), (II) and (III), being from 5 to 40, preferably from 7 to 35;
♦ **(i3)** said optional polyamide chains ($C_3$) having the general formula (IV)

$- \{NR' -W-C (O) \}_z-$ (IV)

where:

* R' and W have the definition given above,
* z is greater than 1;

➢ and **(ii)**

♦ **(ii1),** as chain ($C_1$) ends,

• an "amide" group of formula (V)

$HO-[(O) C-W-NR')-]_p$ (V)

where

* the symbols W and R' have the definition given above,
* p is equal to at least 1;

and/or:

• a group of formula (VI1)

$Z-(O-R)_n-O-$ (VI1)

where:

* R and n have the definition given above,
* Z represents

• H,
• a sulfobenzoyl group,
• a sulfoalkyl group comprising from 2 to 30 carbon atoms,
• a phenylsulfonate group;

and/or:

• a group of formula (VII1)

Y-O- (VII1)

where Y represents H or an alkyl radical comprising from 1 to 30 carbon atoms, preferably methyl;
and/or:
• a residue -Y, with the definition given above, bonded to an oxygen atom of an ether functional group of the chain ($C_1$) ;

♦ **(ii2),** as chain ($C_2$) ends,

• a group of formula (VI2)

$Z- (O-R) _n-O-$ (VI2)

where:

R, Z and n have the definition given above;
and/or:

• a group of formula (VII2)

Y-O- (VII2)

where Y has the definition given above;
and/or:
• a residue -Y, with the definition given above, bonded to an oxygen atom of an ether functional group of the chain ($C_2$);

♦ **(<u>ii3</u>)** and, as chain ($C_3$) ends,

• a hydrogen atom bonded to a nitrogen atom of the chain ($C_3$) ;
• and a functional group -OH bonded to a carbonyl residue -C (O) - of the chain ($C_3$) ;

- said units of the chains ($C_1$) being

• bonded to one another or to the chain ends **(ii1)** of formulae (VI1) and (VII1) by ester bonds;
• bonded to the chain ends **(ii1)** of formula (V) by amide bonds;

- the chain ($C_2$) being bonded to the chain ends (ii2) of formulae (VI2) and (VII2) by ester bonds;
- the number of units of formulae (I) and (II) of the chains ($C_1$), the values of m, of p, of x and of z being such that the weight-average molar mass of said linear sulfonated copolymers (C) is from 500 to 80 000 g/mol, preferably from 1500 to 80 000 g/mol, very particularly from 3000 to 20 000 g/mol;
- the value of m, of m+p, of m+z or of m+p+z, when one or more "amides" groups of formula (V) and/or one or more polyamide chains ($C_3$) are present, being such that the ratio of the number of -C(O)-Q-C(O)-groups to the number of -(NR'-W-C(O)- groups present in said linear sulfonated copolymers (C) is between 1/99 and 99/1, preferably between 10/90 and 99/1, very particularly between 40/60 and 95/5.

**2.** The linear sulfonated copolymer (C) as claimed in claim 1, **characterized in that** the polyesteramide chains ($C_1$) are composed essentially of

• at least one unit of formula (I')

$$[-C(O)-Q-C(O)-\{NR'-W-C(O)\}_m-(O-CH_2-CH_2-)_n-O-] \quad (I')$$

and optionally of
• at least one unit of formula (II')

$$[-C(O)-Q-C(O)-(O-CH_2-CH_2-)_n-O] \quad (II')$$

**3.** The linear sulfonated copolymer (C) as claimed in claim 2, **characterized in that** the groups of formula (V) above and/or of formula (VI'1)

$$H-(O-CH_2-CH_2-)_n-O \quad (VI'\,1)$$

and/or a hydrogen atom H are present as chain ($C_1$) ends.

**4.** The linear sulfonated copolymer (C) as claimed in any one of claims 1 to 3, **characterized in that** the optional polyester chains ($C_2$) have the general formula (III')

$$[-C(O)-Q-C(O)-(O-CH_2-CH_2-)_n-O]_x \quad (III')$$

**5.** The linear sulfonated copolymer (C) as claimed in claim 4, **characterized in that** the groups of formula (VI'2)

$$H-(O-CH_2-CH_2-)_n-O \quad (VI'2)$$

and/or a hydrogen atom H are present as chain ($C_2$) ends.

6. The linear sulfonated copolymer (C) as claimed in any one of claims 2 to 5, **characterized in that** the molar percentage of the residues of formula ($O-CH_2-CH_2-)_n$ where n is equal to 1, with respect to the combined residues of formula ($O-CH_2-CH_2-)_n$ where n is equal to 1, 2, 3 and 4, in the units or end (s) of formulae (I'), (II'), (VI'1), (III)') and (VI'2) is from 10 to 80, preferably from 20 to 60.

7. The linear sulfonated copolymer (C) as claimed in any one of claims 1 to 6, **characterized in that** the nonionic residues (NQ) of the units of formulae (I), (II) and (III) are chosen from nonionic $C_6$-$C_{14}$ mono- or polyarylene residues and linear or branched nonionic $C_1$-$C_9$ alkylene residues.

8. The linear sulfonated copolymer (C) as claimed in claim 7, **characterized in that** the nonionic residues (NQ) are 1,4-phenylene residues (NQ1) or 1,3-phenylene residues (NQ2).

9. The linear sulfonated copolymer (C) as claimed in claim 7 or 8, **characterized in that** the nonionic residues (NQ) of the units of formulae (I), (II) and (III) are 1,4-phenylene residues (NQ1) or a mixture of 1,4-phenylene residues (NQ1) and of 1,3-phenylene residues (NQ2), the molar percentage of the units of formula -C (O) -Q-C (O) - where Q is a residue (NQ1), with respect to the combined units of formula -C (O) -Q-C (O) - where Q is a nonionic residue (NQ), being from 50 to 100, preferably from 70 to 90.

10. The linear sulfonated copolymer (C) as claimed in any one of claims 1 to 9, **characterized in that** the sulfonated residues (SQ) of the units of formulae (I), (II) and (III) are chosen from sulfonated $C_6$-$C_{14}$ mono- or polyarylene residues and sulfonated, linear or branched, $C_1$-$C_9$ alkylene residues carrying at least one sulfonic acid functional group, preferably in the form of an alkali metal or tetraalkylammonium sulfonate.

11. The linear sulfonated copolymer (C) as claimed in claim 10, **characterized in that** the sulfonated residue (SQ) a 5-(sodiooxysulfonyl)-1,3-phenylene residue.

12. The linear sulfonated copolymer (C) as claimed in any one of claims 1 to 11, **characterized in that** the symbol W in the formulae (I), (I'), (IV) and (V) represents an ethylene, trimethylene, tetramethylene, pentamethylene, heptamethylene, decamethylene, undecamethylene or phenylene residue.

13. The linear sulfonated copolymer (C) as claimed in any one of claims 1 to 12, **characterized in that** the symbol R' in the formulae (I), (I'), (IV) and (V) represents H.

14. A process for the preparation of the linear sulfonated copolymer (C) forming the subject matter of any one of claims 1 to 13, by:

- insertion/polymerization reaction, in the presence of an insertion/polymerization catalyst, or
- aminolysis/acidolysis/polycondensation reaction, in the presence of an aminolysis/acidolysis/polycondensation catalyst, or
- ester/amide exchange reaction, in the presence of an ester/amide exchange catalyst, in a molten medium

**(a)** - of at least one amino acid or poly(amino acid) ("polyamide") of formula (VIII) or corresponding lactam

$$H\text{- [NR' -W-C (O) -]}_{q}OH \qquad (VIII)$$

where:

- W and R' have the definition given above,
- Q ranges from 1 to 200, preferably from 1 to 100;

**(b) -** with a linear sulfonated polyester comprising

**(b1)** a polyester chain of general formula (IX)

$$[-C(O)-Q-C(O)-(O-R-)_n-O]_y \qquad (IX)$$

where:

* the symbol Q represents

• a nonionic mono- or polyarylene or nonionic alkylene residue (NQ),
• or a sulfonated mono- or polyarylene or sulfonated alkylene residue (SQ) carrying at least one sulfonic acid or sulfonate functional group,

* R is a linear or branched alkylene residue comprising from 2 to 4 carbon atoms, preferably ethylene,
* n ranges from 1 to 4,
* y is greater than 1;
and

**(b2),** as chain ends, groups of formula (VI2) and/or (VII2) and/or Y given above,

the molar percentage of the groups of formula

- C(O)-Q-C(O)- where Q is a sulfonated residue (SQ), with respect to the combined groups of formula
- C(O)-Q-C(O)- in the units of formula (VIII), being from 5 to 40, preferably from 7 to 35;
• the values of n and y being such that the weight-average molecular mass of said polyester is greater than 1500 g/mol, preferably between 2000 and 10 000 g/mol;
• the relative amounts of amino acid, poly(amino acid) of formula (VIII) or lactam and of linear sulfonated polyester being such that the ratio of the number of -C(O)-Q-C(O)- groups employed via said linear sulfonated polyester to the number of -(NR'-W-C(O)-groups employed via said amino acid or poly(amino acid) of formula (VIII) or lactam is between 1/99 and 99/1, preferably between 10/90 and 99/1, very particularly between 40/60 and 95/5.

**15.** The process as claimed in claim 14, **characterized in that** the amino acids, poly(amino acid)s or lactams are chosen from:

• β-propiolactam, γ-butyrolactam, δ-valerolactam, ε-caprolactam, η-caprylolactam, the lactam of ω-aminoundecanoic acid, and the corresponding amino acids,
• para- and meta-aminobenzoic acids,
• polyamide 6, polyamide 8, polyamide 12, and their copolymers, with a degree of polymerization ranging from 2 to 200, preferably from 2 to 100.

**16.** The process as claimed in claim 14 or 15, **characterized in that** the linear sulfonated polyester employed comprises:

* a polyester chain of general formula (IX')

$$[-C\ (O)\ -Q-C\ (O)\ -\ (O-CH_2-CH_2-)_n-O]_y \qquad (IX')$$

and
* ,as chain ends, groups of formula (VI'2)

$$H-\ (O-CH_2-CH_2-)_n-O- \qquad (VI'\ 2)$$

and H.

**17.** The process as claimed in claim 16, **characterized in that** the molar percentage of the residues of formula $(O-CH_2-CH_2-)_n$ where n is equal to 1, with respect to the combined residues of formula $(O-CH_2-CH_2-)_n$ where n is equal to 1, 2, 3 and 4, in the chains or end(s) of formulae (IX') and (VI'2) is from 10 to 80, preferably from 20 to 60.

**18.** A composition for the treatment of articles made of textile fibers, intended to be employed in an operation in which said articles are washed and/or rinsed, prespotted, dried in a tumble dryer or ironed, comprising from 0.01 to 70%, preferably from 0.05 to 30%, with respect to the weight of said compositions, of at least one water-soluble or water-dispersible linear sulfonated copolymer (C) forming the subject matter of any one of claims 1 to 13 or obtained

according to the process forming the subject matter of any one of claims 14 to 17.

**19.** The composition as claimed in claim 18, **characterized in that** it is provided:

* in the form of a solid or of a concentrated aqueous solution or dispersion brought into contact with the articles to be treated after dilution in water;
* in the form of a concentrated aqueous solution or dispersion deposited beforehand on the dry articles to be treated before dilution in water;
* in the form of an aqueous solution or dispersion to be deposited directly on the dry articles to be treated without dilution or of a solid support comprising said linear sulfonated copolymer (C) to be applied directly to the dry articles to be treated;
* in the form of an insoluble solid support comprising said linear sulfonated copolymer (C) brought directly into contact with the articles to be treated in the wet state.

**20.** The composition as claimed in claim 18 or 19, **characterized in that** said composition is:

- a solid or liquid detergent formulation comprising from 0.01 to 10%, preferably from 0.1 to 1%, of said copolymer (C), expressed on a dry basis, capable of directly forming a detergent bath by dilution;
- a liquid rinsing formulation comprising from 0.01 to 10%, preferably from 0.1 to 5%, of said copolymer (C), expressed on a dry basis, capable of directly forming a rinsing bath by dilution;
- a solid material, in particular a textile material, comprising from 0.01 to 70%, preferably from 0.1 to 30%, of said copolymer (C), expressed on a dry basis, intended to be brought into contact with wet articles in a tumble dryer;
- an aqueous ironing formulation comprising from 0.01 to 50%, preferably from 0.1 to 5%, of said copolymer (C), expressed on a dry basis;
- a prespotter comprising from 0.01 to 10%, preferably from 0.05 to 3%, of said copolymer (C), expressed on a dry basis, intended to be deposited on dry articles prior to a washing operation using a detergent formulation which may or may not comprise said linear sulfonated copolymer (C).

**21.** The composition as claimed in any one of claims 18 to 20, **characterized in that** said composition additionally comprises at least one surface-active agent and/or one detergency and/or rinsing and/or ironing additive for articles made of textile fibers and/or one solid support for said copolymer (C).

**22.** The use, in a composition for the treatment of articles made of textile fibers intended to be employed in an operation in which said articles are washed and/or rinsed, prespotted, dried in a tumble dryer or ironed, of at least one linear sulfonated copolymer (C) forming the subject matter of any one of claims 1 to 13 or obtained according to the process forming the subject matter of any one of claims 14 to 17 as soil release and/or antiredeposition and/or detergent agent.

**23.** The use as claimed in claim 23, **characterized in that** said composition is:

- a solid or liquid detergent formulation comprising from 0.01 to 10%, preferably from 0.1 to 1%, of said copolymer (C), expressed on a dry basis, capable of directly forming a detergent bath by dilution;
- a liquid rinsing formulation comprising from 0.01 to 10%, preferably from 0.1 to 5%, of said copolymer (C), expressed on a dry basis, capable of directly forming a rinsing bath by dilution;
- a solid material, in particular a textile material, comprising from 0.01 to 70%, preferably from 0.1 to 30%, of said copolymer (C), expressed on a dry basis, intended to be brought into contact with wet articles in a tumble dryer;
- an aqueous ironing formulation comprising from 0.01 to 50%, preferably from 0.1 to 5%, of said copolymer (C), expressed on a dry basis;
- a prespotter comprising from 0.01 to 10%, preferably from 0.05 to 3%, of said copolymer (C), expressed on a dry basis, intended to be deposited on dry articles prior to a washing operation using a detergent formulation which may or may not comprise said linear sulfonated copolymer (C).

**24.** A process for improving the properties of a composition intended for washing and/or rinsing, prespotting, drying in a tumble dryer or ironing said articles made of textile fibers by addition to said composition of at least one linear sulfonated copolymer (C) forming the subject matter of any one of claims 1 to 13 or obtained according to the process forming the subject matter of any one of claims 14 to 17 in an amount which is effective in contributing soil release and/or antiredeposition and/or detergency properties to said compositions.

**25.** The process as claimed in claim 24, **characterized in that** the amount of linear sulfonated copolymer (C) is from 0.01 to 70%, preferably from 0.05 to 30%, with respect to the weight of said compositions.

**26.** The process as claimed in claim 24 or 25, **characterized in that** said composition is:

- a solid or liquid detergent formulation comprising from 0.01 to 10%, preferably from 0.1 to 1%, of said copolymer (C), expressed on a dry basis, capable of directly forming a detergent bath by dilution;
- a liquid rinsing formulation comprising from 0.01 to 10%, preferably from 0.1 to 5%, of said copolymer (C), expressed on a dry basis, capable of directly forming a rinsing bath by dilution;
- a solid material, in particular a textile material, comprising from 0.01 to 70%, preferably from 0.1 to 30%, of said copolymer (C), expressed on a dry basis, intended to be brought into contact with wet articles in a tumble dryer;
- an aqueous ironing formulation comprising from 0.01 to 50%, preferably from 0.1 to 5%, of said copolymer (C), expressed on a dry basis;
- a prespotter comprising from 0.01 to 10%, preferably from 0.05 to 3%, of said copolymer (C), expressed on a dry basis, intended to be deposited on dry articles prior to a washing operation using a detergent formulation which may or may not comprise said linear sulfonated copolymer (C).

## Patentansprüche

**1.** Wasserlösliche oder wasserdispergierbare lineare sulfonierte Copolymere (C), **dadurch gekennzeichnet, dass** diese aufweisen:

➢ **(i)** lineare Polyesteramidketten ($C_1$), gegebenenfalls lineare Polyesterketten ($C_2$), und gegebenenfalls Polyamidketten ($C_3$),

♦ **(i1)** wobei die linearen Polyesteramidketten ($C_1$) im Wesentlichen bestehen aus

• wenigstens einer "Esteramid"-Gruppierung der allgemeinen Formel (I)

$$[-C(O)-Q-C(O)-\{NR'-W-C(O)\}_m-(O-R-)_n-O-] \qquad (I)$$

in der

* das Symbol Q darstellt

· einen nicht ionischen Mono- oder Polyarylen- oder einen nicht ionischen Alkylenrest (NQ),
· oder einen sulfonierten Mono- oder Polyarylen- oder einen sulfonierten Alkylenrest (SQ), der Träger wenigstens einer Sulfonsäure- oder Sulfonatfunktion ist,

* R' Wasserstoff oder ein Alkylenrest mit 1 bis 4 Kohlenstoffatomen ist,
* W ein nicht ionischer Alkylen- oder ein nicht ionischer Arylenrest mit 1 bis 20 Kohlenstoffatomen, vorzugsweise 1 bis 12 Kohlenstoffatomen ist,
* R ein linearer oder verzweigter Alkylenrest mit 2 bis 4 Kohlenstoffatomen, vorzugsweise Ethylen, ist,
* m wenigstens gleich 1 ist,
* n im Bereich von 1 bis 4 liegt;

und gegebenenfalls aus
• wenigstens einer "Ester"-Gruppierung der allgemeinen Formel (II)

$$[-C(O)-Q-C(O)-(O-R-)_n-O-] \qquad (II)$$

in der
die Symbole Q, R und n die oben beschriebene Bedeutung haben;

♦ **(i2)** wobei die gegebenenfalls vorhandenen linearen Polyesterketten ($C_2$) die allgemeine Formel (III)

aufweisen

$$[-C(O)-Q-C(O)-(O-R-)_n-O-]_x \qquad (III)$$

in der

* die Symbole Q, R und n die oben beschriebene Bedeutung haben,
* x größer als 1 ist,

wobei der Mol-Prozentgehalt der Gruppen der Formel -C(O)-Q-C(O)-, in der Q ein sulfonierter Rest (SQ) ist, bezogen auf alle Einheiten der Formel -C(O)-Q-C(O)- in den Gruppierungen oder Ketten der Formeln (I), (II) und (III) im Bereich von 5 bis 40, vorzugsweise im Bereich von 7 bis 35 liegt;

♦ **(i3)** wobei die gegebenenfalls vorhandenen Polyamidketten ($C_3$) die allgemeine Formel (IV) aufweisen

$$\{NR'-W-C(O)\}_z- \qquad (IV)$$

in der

* R' und W die oben beschriebene Bedeutung haben,
* z größer als 1 ist;

➢ und **(ii)**

♦ **(ii1)** an den Enden der Kette ($C_1$)

• eine "Amid"-Gruppe der Formel (V)

$$HO-[(O)-C-W-NR')-]_p \qquad (V)$$

in der

* die Symbole W und R' die oben beschriebene Bedeutung haben,
* p wenigstens gleich 1 ist;

und/oder

• eine Gruppe der Formel (VI1)

$$Z-(O-R)_n-O- \qquad (VI1)$$

in der

* R und n die oben beschriebene Bedeutung haben,
* Z darstellt

  • Wasserstoff,
  • eine Sulfobenzoylgruppe,
  • eine Sulfoalkylgruppe mit 2 bis 30 Kohlenstoffatomen,
  • eine Phenylsulfonatgruppe,

und/oder

• eine Gruppe der Formel (VII1)

$$Y-O- \qquad (VII1)$$

in der Y Wasserstoff oder ein Alkylradikal mit 1 bis 30 Kohlenstoffatomen, vorzugsweise Methyl, darstellt;
und/oder

• ein Rest -Y mit der oben beschriebenen Bedeutung, gebunden an ein Sauerstoffatom einer Ether-

funktion der Kette ($C_1$);

♦ **(ii2)** an den Enden der Kette ($C_2$)

• eine Gruppe der Formel (VI2)

$$Z\text{-}(O\text{-}R)_n\text{-}O\text{-} \qquad (VI2)$$

in der

* R, Z und n die oben beschriebene Bedeutung haben;

und/oder
• eine Gruppe der Formel (VII2)

$$Y\text{-}O\text{-} \qquad (VII2)$$

in der Y die oben beschriebene Bedeutung hat;
und/oder
• ein Rest -Y mit der oben beschriebenen Bedeutung, gebunden an ein Sauerstoffatom einer Etherfunktion der Kette ($C_2$);

♦ **(ii3)** und an den Enden der Kette ($C_3$)

• ein Wasserstoffatom, gebunden an ein Stickstoffatom der Kette ($C_3$);
• und eine Funktion -OH, gebunden an einen Carbonylrest -C(O)- der Kette ($C_3$);

- wobei die Gruppierungen der Kette ($C_1$)

• miteinander oder an den Enden der Ketten (ii1) der Formeln (VI1) und (VII1) durch Esterbindungen verbunden sind,
• an den Enden der Ketten (ii1) der Formel (V) durch Amidbindungen verbunden sind,

- wobei die Kette ($C_2$) mit den Enden der Ketten (ii2) der Formeln (VI2) und (VII2) durch Esterbindungen verbunden ist;
- wobei die Anzahl an Gruppierungen der Formeln (I) und (II) der Ketten ($C_1$), die Werte von m, p, x und z derart sind, dass die mittlere molare Masse in Gewicht der linearen sulfonierten Copolymere (C) 500 bis 80.000 g/mol, vorzugsweise 1.500 bis 80.000 g/mol, insbesondere 3.000 bis 20.000 g/mol, beträgt;
- wobei der Wert von m, von m+p, von m+z oder von m+p+z, wenn eine oder mehrere "Amid"gruppen der Formel (V) und/oder eine oder mehrere Polyamidketten ($C_3$) vorhanden sind, derart ist, dass das Verhältnis der Anzahl an Gruppen -C(O)-Q-C(O)- zu der Anzahl an Gruppen -(NR'-W-C(O)-, die in den linearen sulfonierten Copolymeren (C) vorhanden sind, im Bereich von 1/99 und 99/1, vorzugsweise im Bereich von 10/90 und 99/1, insbesondere im Bereich von 40/60 und 95/5 liegt.

**2.** Lineare sulfonierte Copolymere (C) gemäß Anspruch 1), **dadurch gekennzeichnet, dass** die Polyesteramidketten ($C_1$) im Wesentlichen bestehen aus

● wenigstens einer Gruppierung der Formel (I')

$$[\text{-}C(O)\text{-}Q\text{-}C(O)\text{-} \{NR'\text{-} W\text{-}C(O)\}_m\text{-}(O\text{-}CH_2\text{-}CH_2\text{-})_n\text{-}O\text{-}] \qquad (I')$$

und gegebenenfalls aus
● wenigstens einer Gruppierung der Formel (II')

$$[\text{-}C(O)\text{-}Q\text{-}C(O)\text{-}(O\text{-}CH_2\text{-}CH_2\text{-})_n\text{-}O\text{-}] \qquad (II')$$

**3.** Lineare sulfonierte Copolymere (C) gemäß Anspruch 2), **dadurch gekennzeichnet, dass** die Gruppen der obenstehenden Formel (V) und/oder der Formel (VI'1)

$$H\text{-}(O\text{-}CH_2\text{-}CH_2\text{-})_n\text{-}O \qquad (VI'1)$$

und/oder ein Wasserstoffatom an den Enden der Ketten ($C_1$) vorhanden sind.

4. Lineare sulfonierte Copolymere (C) gemäß einem der Ansprüche 1) bis 3), **dadurch gekennzeichnet, dass** die gegebenenfalls vorhandenen Polyesterketten ($C_2$) als allgemeine Formel (III') aufweisen

$$[\text{-}C(O)\text{-}Q\text{-}C(O)\text{-}(O\text{-}CH_2\text{-}CH_2\text{-})_n\text{-}O]_x \qquad (III')$$

5. Lineare sulfonierte Copolymere (C) gemäß Anspruch 4), **dadurch gekennzeichnet, dass** die Gruppen der Formel (VI'2)

$$H\text{-}(O\text{-}CH_2\text{-}CH_2\text{-})_n\text{-}O \qquad (VI'2)$$

und/oder ein Wasserstoffatom an den Enden der Ketten ($C_2$) vorhanden sind.

6. Lineare sulfonierte Copolymere (C) gemäß einem der Ansprüche 2) bis 5), **dadurch gekennzeichnet, dass** der Mol-Prozentgehalt der Reste der Formel $(O\text{-}CH_2\text{-}CH_2\text{-})_n$, in der n gleich 1 ist, bezogen auf alle Reste der Formel $(O\text{-}CH_2\text{-}CH_2\text{-})_n$, in der n gleich 1, 2, 3 und 4 ist, in den Gruppierungen oder dem/ den Ende(n) der Formeln (I'), (II'), (VI'), (III') und (VI'2) im Bereich von 10 bis 80, vorzugsweise im Bereich von 20 bis 60 liegt.

7. Lineare sulfonierte Copolymere (C) gemäß einem der Ansprüche 1) bis 6), **dadurch gekennzeichnet, dass** die nicht ionischen Reste (NQ) der Gruppierungen der Formeln (I), (II) und (III) gewählt sind aus den nicht ionischen Mono- oder Polyarylenresten mit $C_6$-$C_{14}$ und den linearen oder verzweigten nicht ionischen Alkylenresten mit $C_1$-$C_9$.

8. Lineare sulfonierte Copolymere (C) gemäß Anspruch 7), **dadurch gekennzeichnet, dass** die nicht ionischen Reste (NQ) 1,4-Phenylen- (NQ1) oder 1,3-Phenylen- (NQ2) Reste sind.

9. Lineare sulfonierte Copolymere (C) gemäß Anspruch 7) oder 8), **dadurch gekennzeichnet, dass** die nicht ionischen Reste (NQ) der Gruppierungen der Formeln (I), (II) und (III) 1,4-Phenylenreste (NQ1) oder eine Mischung aus 1,4-Phenylen- (NQ1) und 1,3-Phenylenresten (NQ2) sind, wobei der Mol-Prozentgehalt der Gruppen der Formel -C (O)-Q-C(O)-, in der Q ein Rest (NQ1) ist, bezogen auf alle Einheiten der Formel - C(O)-Q-C(O)-, in der Q ein nicht ionischer Rest (NQ) ist, im Bereich von 50 bis 100, vorzugsweise im Bereich von 70 bis 90 liegt.

10. Lineare sulfonierte Copolymere (C) gemäß einem der Ansprüche 1) bis 9), **dadurch gekennzeichnet, dass** die sulfonierten Reste (SQ) der Gruppierungen der Formeln (I), (II) und (III) gewählt sind aus den sulfonierten Mono- oder Polyarylenresten mit $C_6$-$C_{14}$ und den linearen oder verzweigten Alkylenresten mit $C_1$-$C_9$ als Träger wenigstens einer Sulfonsäurefunktion, vorzugsweise in Form eines Alkalimetall- oder Tetraalkylammoniumsulfats.

11. Lineare sulfonierte Copolymere (C) gemäß Anspruch 10), **dadurch gekennzeichnet, dass** der sulfonierte Rest (SQ) ein Natriumoxysulfonyl-5 1,3-phenylenrest ist.

12. Lineare sulfonierte Copolymere (C) gemäß einem der Ansprüche 1) bis 11), **dadurch gekennzeichnet, dass** das Symbol W in den Formeln (I), (I'), (IV) und (V) ein Ethylen-, Trimethylen-, Tetramethylen-, Pentamethylen-, Heptamethylen-, Decamethylen-, Undecamethylen-, Phenylenrest ist.

13. Lineare sulfonierte Copolymere (C) gemäß einem der Ansprüche 1) bis 12), **dadurch gekennzeichnet, dass** das Symbol R' in den Formeln (I), (I'), (IV) und (V) Wasserstoff darstellt.

14. Verfahren zur Herstellung von linearen sulfonierten Copolymeren (C) gemäß einem der Ansprüche 1) bis 13) durch Reaktion:

- Insertion/ Polymerisation in Anwesenheit eines Insertions-/ Polymerisationskatalysators oder
- Aminolyse/ Acidolyse/ Polykondensation in Anwesenheit eines Aminolyse-/ Acidolyse-/ Polykondensationskatalysators oder
- Austausch Ester/ Amid in Anwesenheit eines Ester-/ Amidaustauschkatalysators, in geschmolzenem Medium,

**(a)** wenigstens einer Aminosäure oder Polyaminosäure ("Polyamid") der Formel (VIII) oder entsprechendem Lactam,

$$H\text{-}[NR'\text{-}W\text{-}C(O)\text{-}]_qOH \qquad (VIII)$$

in der

- · W und R' die oben beschriebene Bedeutung haben,
- · q im Bereich von 1 bis 200, vorzugsweise 1 bis 100 liegt;

**(b) -** mit einem linearen sulfonierten Polyester, welcher aufweist

**(b1)** eine Polyesterkette der allgemeinen Formel (IX)

$$[\text{-}C(O)\text{-}Q\text{-}C(O)\text{-}(O\text{-}R\text{-})_n\text{-}O]_y \qquad (IX)$$

in der

* das Symbol Q darstellt

- · einen nicht ionischen Mono- oder Polyarylen- oder einem nicht ionischen Alkylenrest (NQ),
- · oder einen sulfonierten Mono- oder Polyarylen- oder einen sulfonierten Alkylenrest (SQ) als Träger wenigstens einer Sulfonsäure- oder Sulfonatfunktion,

* R ein linearer oder verzweigter Alkylenrest mit 2 bis 4 Kohlenstoffatomen ist, vorzugsweise Ethylen,
* n im Bereich von 1 bis 4 liegt,
* y größer als 1 ist

und
**(b2)** an den Enden der Kette Gruppierungen der Formel (VI2) und/oder (VII2) und/oder Y wie oben beschrieben,

wobei der Mol-Prozentgehalt der Gruppen der Formel -C(O)-Q-C(O)-, in der Q ein sulfonierter Rest (SQ) ist, bezogen auf alle Einheiten der Formel -C(O)-Q-C(O)- in den Gruppierungen der Formel (VIII) im Bereich von 5 bis 40, vorzugsweise im Bereich von 7 bis 35 liegt;

- · wobei die Werte n und y derart sind, dass die mittlere molare Masse in Gewicht des Polyesters größer als 1.500 g/mol, vorzugsweise im Bereich zwischen 2.000 und 10.000 g/mol ist;
- · die relativen Mengen von Aminosäure, Polyaminosäure der Formel (VIII) oder Lactam und linearem sulfonierten Polyester derart sind, dass das Verhältnis der Anzahl an Gruppen -C(O)-Q-C(O), verwendet mittels des linearen sulfonierten Polyesters, zur Anzahl an Gruppen -(NR'-W-C(O)-, verwendet mittels der Aminosäure oder Polyaminosäure der Formel (VIII) oder Lactam, im Bereich von 1/99 und 99/1, vorzugsweise im Bereich von 10/90 und 99/1, insbesondere im Bereich von 40/60 und 95/5 liegt.

**15.** Verfahren zur Herstellung gemäß Anspruch 14), **dadurch gekennzeichnet, dass** die Aminosäuren, Polyaminosäuren oder Lactame gewählt sind aus:

- · Beta-Propiolactam, Gamma-Butyrolactam, Delta-Valerolactam, Epsilon-Caprolactam, Eta-Caprylolactam, Lactam der Omega-Undeca-Aminosäure sowie den entsprechenden Aminosäuren;
- · Para- und Meta-Aminobenzoesäure;
- · Polyamid 6, Polyamid 8, Polyamid 12 und deren Copolymeren mit einem Polymerisationsgrad im Bereich von 2 bis 200, vorzugsweise 2 bis 100.

**16.** Verfahren gemäß Anspruch 14) oder 15), **dadurch gekennzeichnet, dass** der verwendete lineare sulfonierte Polyester aufweist:

* eine Polyesterkette der allgemeinen Formel (IX')

$$[-C(O)-Q-C(O)-(O-CH_2-CH_2)_n-O]_y \qquad (IX')$$

und
* an den Enden der Kette Gruppierungen der Formel (VI'2)

$$H-(O-CH_2-CH_2-)_n-O- \qquad (VI'2)$$

sowie H.

**17.** Verfahren gemäß Anspruch 16), **dadurch gekennzeichnet, dass** der Mol-Prozentgehalt der Reste der Formel $(O-CH_2-CH_2-)_n$, in der n gleich 1 ist, bezogen auf alle Reste der Formel $(O-CH_2-CH_2-)_n$, in der n gleich 1, 2, 3 und 4 ist in den Ketten oder dem/ den Ende(n) der Formel (IX') und (VI'2) im Bereich von 10 bis 80, vorzugsweise im Bereich von 20 bis 60 liegt.

**18.** Zusammensetzung zur Behandlung von Artikeln aus Textilfasern, welche dazu bestimmt ist, beim Waschen und/ oder Spülen, Fleckentfernen vor dem Waschen, Trocknen im Wäschetrockner oder Bügeln dieser Artikel verwendet zu werden, welche 0,01 bis 70%, vorzugsweise 0,05 bis 30% bezogen auf das Gewicht dieser Zusammensetzungen wenigstens eines wasserlöslichen oder wasserdispergierbaren linearen sulfonierten Copolymers (C) gemäß einem der Ansprüche 1) bis 13) oder solches, das gemäß einem der Ansprüche 14) bis 17) erhalten wurde, aufweist.

**19.** Zusammensetzung gemäß Anspruch 18), **dadurch gekennzeichnet, dass** sie vorliegt:

* in Form eines Feststoffs oder einer wässrigen konzentrierten Lösung oder Dispersion, welche(r) mit den zu behandelnden Artikeln nach Verdünnung in Wasser in Kontakt gebracht wird;
* in Form einer wässrigen konzentrierten Lösung oder Dispersion, welche vor Verdünnung im Wasser auf den zu behandelnden trockenen Artikeln abgelagert wird;
* in Form einer wässrigen Lösung oder Dispersion, welche direkt auf den zu behandelnden trockenen Artikeln ohne Verdünnen abgelagert wird, oder eines festen Trägers, welcher das lineare sulfonierte Copolymer (C) aufweist und direkt auf die zu behandelnden trockenen Artikel aufgebracht wird;
* in Form eines nicht löslichen festen Trägers, welcher das lineare sulfonierte Copolymer (C) aufweist und direkt auf die zu behandelnden Artikel in feuchtem Zustand aufgebracht wird.

**20.** Zusammensetzung gemäß Anspruch 18) oder 19), **dadurch gekennzeichnet, dass** die Zusammensetzung ist:

- eine feste oder flüssige Reinigungsformulierung mit 0,01 bis 10%, vorzugsweise 0,1 bis 1 % des Copolymers (C), ausgedrückt in Trockenmasse, die dazu geeignet ist, durch Verdünnung direkt ein Waschlaugenbad zu bilden;
- eine flüssige Spülformulierung mit 0,01 bis 10%, vorzugsweise 0,1 bis 5% des Copolymers (C), ausgedrückt in Trockenmasse, die dazu geeignet ist, durch Verdünnung direkt ein Spülbad zu bilden;
- ein festes Material, insbesondere Textil, mit 0,01 bis 70%, vorzugsweise 0,1 bis 30%, des Copolymers (C), ausgedrückt in Trockenmasse, das dazu bestimmt ist, mit den feuchten Artikeln in einem Wäschetrockner in Kontakt gebracht zu werden;
- eine wässrige Formulierung zum Bügeln mit 0,01 bis 50%, vorzugsweise 0,1 bis 5%, des Copolymers (C), ausgedrückt in Trockenmasse;
- ein Waschzusatz mit 0,01 bis 10%, vorzugsweise 0,05 bis 3% des Copolymers (C), ausgedrückt in Trockenmasse, der dazu bestimmt ist, auf den trockenen Artikeln vor einem Waschvorgang mittels einer Reinigungsformulierung, welche das lineare sulfonierte Copolymer (C) enthält oder nicht, abgelagert zu werden.

**21.** Zusammensetzung gemäß einem der Ansprüche 18) bis 20), **dadurch gekennzeichnet, dass** die Zusammensetzung des Weiteren wenigstens ein Tensid und/oder einen Reinigungszusatz und/oder Spülzusatz und/oder Bügelzusatz für die Artikel aus Textilfasern und/oder einen festen Träger des Copolymers (C) aufweist.

**22.** Verwendung in einer Zusammensetzung zur Behandlung von Textilfasem, die dazu bestimmt ist, beim Waschen und/oder Spülen, Fleckentfemen vor dem Waschen, Trocknen im Wäschetrockner oder Bügeln dieser Artikel verwendet zu werden, wenigstens eines linearen sulfonierten Copolymers (C) gemäß einem der Ansprüche 1) bis 13) oder eines, das gemäß einem der Ansprüche 14) bis 17) erhalten wurde, als Anti-Schmutz-Mittel ("soil release")

und/oder Anti-Neuablagerungsmittel und/oder als Reinigungsmittel.

**23.** Verwendung gemäß Anspruch 23), **dadurch gekennzeichnet, dass** die Zusammensetzung ist:

- eine feste oder flüssige Reinigungsformulierung mit 0,01 bis 10%, vorzugsweise 0,1 bis 1 % des Copolymers (C), ausgedrückt in Trockenmasse, die dazu geeignet ist, durch Verdünnung direkt ein Waschlaugenbad zu bilden;
- eine flüssige Spülformulierung mit 0,01 bis 10%, vorzugsweise 0,1 bis 5% des Copolymers (C), ausgedrückt in Trockenmasse, die dazu geeignet ist, durch Verdünnung direkt ein Spülbad zu bilden;
- ein festes Material, insbesondere Textil, mit 0,01 bis 70%, vorzugsweise 0,1 bis 30%, des Copolymers (C), ausgedrückt in Trockenmasse, das dazu bestimmt ist, mit den feuchten Artikeln in einem Wäschetrockner in Kontakt gebracht zu werden;
- eine wässrige Formulierung zum Bügeln mit 0,01 bis 50%, vorzugsweise 0,1 bis 5%, des Copolymers (C), ausgedrückt in Trockenmasse;
- ein Waschzusatz mit 0,01 bis 10%, vorzugsweise 0,05 bis 3% des Copolymers (C), ausgedrückt in Trockenmasse, der dazu bestimmt ist, auf den trockenen Artikeln vor einem Waschvorgang mittels einer Reinigungsformulierung, welche das lineare sulfonierte Copolymer (C) enthält oder nicht, abgelagert zu werden.

**24.** Verfahren zum Verbessern der Eigenschaften einer Zusammensetzung, die dazu bestimmt ist, beim Waschen und/oder Spülen, Fleckentfemen vor dem Waschen, Trocknen im Wäschetrockner oder Bügeln dieser Artikel aus Textilfaser verwendet zu werden, durch Hinzufügen zu der Zusammensetzung wenigstens eines linearen sulfonierten Copolymers (C) gemäß einem der Ansprüche 1) bis 13) oder eines, das gemäß einem der Ansprüche 14) bis 17) erhalten wurde, in ausreichender Menge, um den Zusammensetzungen Eigenschaften von Anti-Schmutz ("soil release") und/oder Anti-Neuablagerung und/oder als Reinigung beizubringen.

**25.** Verfahren gemäß Anspruch 24), **dadurch gekennzeichnet, dass** die Menge an linearem sulfoniertem Copolymer (C) 0,01 bis 70%, vorzugsweise 0,05 bis 30%, bezogen auf das Gewicht der Zusammensetzungen beträgt.

**26.** Verfahren gemäß Anspruch 24) oder 25), **dadurch gekennzeichnet, dass** die Zusammensetzung ist:

- eine feste oder flüssige Reinigungsformulierung mit 0,01 bis 10%, vorzugsweise 0,1 bis 1% des Copolymers (C), ausgedrückt in Trockenmasse, die dazu geeignet ist, durch Verdünnung direkt ein Waschlaugenbad zu bilden;
- eine flüssige Spülformulierung mit 0,01 bis 10%, vorzugsweise 0,1 bis 5% des Copolymers (C), ausgedrückt in Trockenmasse, die dazu geeignet ist, durch Verdünnung direkt ein Spülbad zu bilden;
- ein festes Material, insbesondere Textil, mit 0,01 bis 70%, vorzugsweise 0,1 bis 30%, des Copolymers (C), ausgedrückt in Trockenmasse, das dazu bestimmt ist, mit den feuchten Artikeln in einem Wäschetrockner in Kontakt gebracht zu werden;
- eine wässrige Formulierung zum Bügeln mit 0,01 bis 50%, vorzugsweise 0,1 bis 5%, des Copolymers (C), ausgedrückt in Trockenmasse;
- ein Waschzusatz mit 0,01 bis 10%, vorzugsweise 0,05 bis 3% des Copolymers (C), ausgedrückt in Trockenmasse, der dazu bestimmt ist, auf den trockenen Artikeln vor einem Waschvorgang mittels einer Reinigungsformulierung, welche das lineare sulfonierte Copolymer (C) enthält oder nicht, abgelagert zu werden.